(19) Europäisches Patentamt
European Patent Office
Office européen des brevets

(11) **EP 4 098 609 A1**

(12) **EUROPÄISCHE PATENTANMELDUNG**

(43) Veröffentlichungstag:
**07.12.2022 Patentblatt 2022/49**

(21) Anmeldenummer: **21020286.7**

(22) Anmeldetag: **31.05.2021**

(51) Internationale Patentklassifikation (IPC):
**C01B 3/38** (2006.01)    **B01D 53/047** (2006.01)
**B01D 53/14** (2006.01)    **C01B 3/48** (2006.01)
**C01B 3/56** (2006.01)

(52) Gemeinsame Patentklassifikation (CPC):
**C01B 3/384; B01D 53/047; B01D 53/1425;**
**B01D 53/1475; C01B 3/48; C01B 3/56;**
C01B 2203/0233; C01B 2203/0283;
C01B 2203/0415; C01B 2203/043;
C01B 2203/0816; C01B 2203/0827;
C01B 2203/1241; C01B 2203/127; C01B 2203/142

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **L'Air Liquide Société Anonyme pour l'Etude et l'Exploitation des Procédés Georges Claude 75321 Paris (FR)**

(72) Erfinder:
• **Schmid MC Guinness, Teja**
  **D-60439 Frankfurt am Main (DE)**
• **Schmidt, Sophia**
  **D-60439 Frankfurt am Main (DE)**
• **Junger, Jasmin**
  **D-60439 Frankfurt am Main (DE)**
• **Kuzniar, Jakub**
  **Krakow (PL)**

(74) Vertreter: **Dropsch, Holger**
  **Air Liquide Forschung und Entwicklung GmbH Gwinnerstraße 27-33 60388 Frankfurt am Main (DE)**

(54) **VERFAHREN UND ANLAGE ZUM HERSTELLEN VON REINWASSERSTOFF DURCH DAMPFREFORMIERUNG MIT REDUZIERTER KOHLENDIOXID-EMISSION**

(57)    Es wird ein Verfahren und eine Anlage zum Herstellen von Reinwasserstoff durch Dampfreformierung eines Kohlenwasserstoffe, vorzugsweise Erdgas oder Naphtha, enthaltenden Einsatzgases mit reduzierter Kohlendioxid-Emission vorgeschlagen. Die Reduktion der Kohlendioxid-Emission wird erfindungsgemäß dadurch erreicht, dass Kohlendioxid sowohl aus dem konvertierten, abgekühlten Synthesegas als auch aus dem Rauchgas des Reformerofens mittels geeigneter Maßnahmen abgeschieden wird.

Fig. 4

**Beschreibung**

**Gebiet der Erfindung**

Die Erfindung betrifft ein Verfahren und eine Anlage zum Herstellen von Reinwasserstoff durch Dampfreformierung eines Kohlenwasserstoffe, vorzugsweise Erdgas oder Naphtha, enthaltenden Einsatzgases mit reduzierter Kohlendioxid-Emission. Die Erfindung betrifft auch die Verwendung einer solchen Anlage und ein Verfahren zum Nachrüsten einer existierenden Dampfreformierungsanlage zum Herstellen von Reinwasserstoff durch Dampfreformierung zur Reduzierung der Kohlendioxid-Emissionen.

**Stand der Technik**

Kohlenwasserstoffe können mit Dampf katalytisch zu Synthesegas, also Mischungen von Wasserstoff ($H_2$) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu weiteren bedeutenden Grundchemikalien wie Methanol oder Ammoniak umgesetzt werden kann. Zwar können unterschiedliche Kohlenwasserstoffe, wie beispielweise Naphtha, Flüssiggas oder Raffineriegase umgesetzt werden, jedoch ist die Dampfreformierung von methanhaltigem Erdgas dominierend.

Nach Vorerhitzung durch Wärmetauscher oder befeuerte Heizer auf eine Temperatur oberhalb von ca. 500 °C, beispielsweise bis zu 650 °C, tritt das Kohlenwasserstoff-DampfGemisch nach Enderhitzung auf ca. 800 bis 950 °C in die Reformerrohre des Dampfreformers ein und wird dort am Reformierungskatalysator zu Kohlenmonoxid und Wasserstoff umgesetzt. Verbreitet sind Reformierungskatalysatoren auf Nickelbasis. Während höhere Kohlenwasserstoffe vollständig zu Kohlenmonoxid und Wasserstoff umgesetzt werden, erfolgt im Falle des Methans üblicherweise ein Teilumsatz. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf. Zur Energieoptimierung oder bei Einsatzstoffen mit höheren Kohlenwasserstoffen kann nach dem Vorerhitzer ein sogenannter Prereformer zur Vorspaltung des Einsatzstoffes eingesetzt werden. Der vorgespaltene Einsatzstoff wird dann in einem weiteren Erhitzer auf die gewünschte Reformerrohreintrittstemperatur erhitzt.

Das heiße Synthesegas-Produktgas wird nach Verlassen des Reformerofens in einem oder mehreren Wärmetauschern im indirekten Wärmetausch gegen aufzuheizende Prozessmedien teilabgekühlt. Das teilabgekühlte Synthesegas-Produktgas durchläuft anschließend noch weitere Konditionierungsschritte, die von der Art des gewünschten Produktes oder des nachgeschalteten Verfahrens anhängig sind. Wenn die Synthesegas-Herstellung primär auf das Erzeugen von Reinwasserstoff gerichtet ist, wird der Wasserstoffgehalt im erzeugten Synthesegas durch die Anwendung der CO-Konvertierung, auch als Wassergas-Shift-Reaktion (WGS) oder CO-Shift-Reaktion bezeichnet, gemäß folgender Umsatzgleichung erhöht:

$$CO + H_2O = CO_2 + H_2$$

Unter Zugabe von Wasserdampf reagiert demnach das CO zu $CO_2$ und $H_2$. Aufgrund der Reaktionsenthalpie von - 41,2 kJ/mol verschiebt sich das chemische Gleichgewicht mit steigender Temperatur von den Reaktionsprodukten hin zu den Reaktionsedukten.

Je nach angewandter Reaktionstemperatur wird dabei von Hochtemperatur (HTS)-, Mitteltemperatur (MTS)- oder Tieftemperatur (LTS)-Shift gesprochen. Je nach Art der verwendeten Katalysatoren ist es ferner möglich, die Shift-Reaktion auch mit dem ungereinigten Rohsynthesegas durchzuführen. Dieses Verfahren wird als Rohgas-Shift oder auch - wegen der aciden Gasbestandteile wie beispielsweise Kohlendioxid - als Sauergas-Shift bezeichnet. Bei allen diesen Konvertierungsverfahren wird ein konvertierter Synthesegasstrom bzw. Rohwasserstoffstrom als Produkt erhalten.

Nachteilig ist es dabei, dass beim Durchführen der CO-Konvertierung als Koppelprodukt des Wasserstoffs das wenig reaktive und daher oft unerwünschte Kohlendioxid anfällt. Die weitere Aufbereitung des konvertierten Synthesegases umfasst daher oft auch ein Verfahren zur Abtrennung des Kohlendioxids, beispielsweise mittels physikalischer oder chemischer Absorption oder Gaswäsche. Solche Verfahren werden auch als Carbon Capture (CC)-Verfahren bezeichnet. Ein bekanntes und häufig angewendetes Verfahren zur Kohlendioxid-Entfernung ist das Rectisol-Verfahren, das eine Wäsche des Rohsynthesegases mit tiefkaltem Methanol als Absorbens umfasst und ebenfalls im oben genannten Schrifttum grundsätzlich beschrieben wird. Andere Waschverfahren bedienen sich anderer Wasch- oder Absorptionsmittel, beispielsweise N-Methylpyrrolidon (NMP), sekundäre Amine, z. B. Diethanolamin, tertiäre Amine, z. B. Methyldiethanolamin (MDEA), Polyethylenglycol-dialkylether, z. B. Polyethylenglycol-dimethylether. Die hierbei spezifisch anzuwendenden Verfahrensbedingungen, deren Auswahl dem Fachmann geläufig ist, werden nachfolgend als Kohlendioxidabtrennungsbedingungen bezeichnet.

Zur Herstellung von Reinwasserstoff folgt als abschließender Schritt üblicherweise die Behandlung des Rohwasserstoffstroms in einer Anlage zur Druckwechseladsorption (pressure swing adsorption, PSA), deren grundsätzliche Eigenschaften in dem Buch "Gasification", C. Higman und M. van der Burgt, Kapitel 8.2.3 "Adsorption systems", Gulf Professional Publishing (2003), dargestellt werden. Die Druckwechseladsorption verwendet Molekularsiebe als Adsorbentien in einer Reihe von Behältern, die in einem gestaffelten zyklischen Modus betrieben werden, der zwischen einer Adsorptionsphase und verschiedenen Phasen der Regeneration wechselt. Es kann eine sehr hohe Reinheit erreicht werden, mit etwa 50 ppm Argon und weniger als 10 ppm anderer Verunreinigungen.

Das aus dem ein konvertierten Synthesegasstrom abgetrennte Kohlendioxid kann ganz oder teilweise zu der Synthesegaserzeugung, beispielsweise der Dampfreformierung, zurückgeführt werden, um es stofflich zu nutzen. Die US-Patentschrift US 8 888 873 B2 offenbart exemplarisch eine Synthesegaserzeugung und Synthesegasaufbereitung mit den Verfahrensstufen Synthesegaserzeugung - Sauergas-($CO_2$)-Abtrennung - Trocknung und Adsorption von Störkomponenten - Tieftemperaturzerlegung des Synthesegases in einer Coldbox. Dabei wird offenbart, dass ein $CO_2$-reicher Strom aus der $CO_2$-Abtrennungsstufe und/oder Gasströme aus der Tieftemperaturzerlegung, die Wasserstoff, Kohlenmonoxid und/oder Methan enthalten, mittels eines oder mehrerer Verdichter zu der Synthesegaserzeugungsstufe zurückgeführt werden und somit besser stofflich genutzt werden können.

Die Rückführung von Kohlendioxid ist aber in der Regel nur dann erwünscht, wenn Kohlenmonoxid eines der Zielprodukte des Verfahrens ist. Bei einem Dampfreformierungsverfahren, das vor allem oder ausschließlich auf die Erzeugung von Reinwasserstoff abstellt, wird das abgetrennte Kohlendioxid dagegen entweder an externe Verbraucher abgegeben oder in die Atmosphäre entlassen. Die letztgenannte Maßnahme ist dabei zunehmend unerwünscht und wird zukünftig zunehmend stärker reglementiert werden, um die Kohlendioxid-Emissionen von Industrieanlagen zu reduzieren, da Kohlendioxid die Erderwärmung aufgrund des Treibhauseffekts beschleunigt.

Bei der Dampfreformierung von Kohlenwasserstoffen besteht eine weitere Kohlendioxid-Quelle in der Beheizung der mit Katalysator gefüllten Reformerrohre mittels einer Vielzahl von Brennern, in denen Erdgas gemeinsam mit kohlenstoffhaltigen Rückführgasen als Heizgas verbrannt wird, wobei ein Kohlendioxid enthaltendes Rauchgas anfällt.

Die Verringerung der Kohlendioxid-Emissionen aus Dampfreformierungsanlagen wurde im Schrifttum bereits thematisiert. So wird in dem Artikel "Hydrogen Production via Steam Reforming with CO2 Capture", G. Collodi, Chemical Engineering Transaction Vol. 19, 2010, pp. 37 - 42, die Kohlendioxid-Abscheidung aus dem Synthesegas (Rohwasserstoff) als auch aus dem bei der Beheizung des Reformerofens anfallenden Rauchgas diskutiert und es werden verschiedene geeignete Methoden erwähnt, beispielsweise die Aminwäsche, die Benutzung physikalischer Absorptionsmittel wie Methanol oder die Membrantrennung.

Ein Nachteil der Kohlenstoff- bzw. Kohlendioxid-Abscheidung aus dem Synthesegas besteht darin, dass dieser Gasstrom nur 55 bis 65 % der Emissionen enthält, so dass die Abscheidungsrate ca. 60 % nicht überschreiten kann, wenn $CO_2$ nur aus dem Synthesegas abgetrennt wird. Während letztlich alle $CO_2$-Emissionen im Reformer-Rauchgas enden, werden zahlreiche Schwierigkeiten der Kohlenstoffabscheidung am Rauchgas genannt. Der niedrige Partialdruck des $CO_2$, typischerweise 0,2 bara, der sich aus der Kombination von niedriger $CO_2$-Konzentration und dem niedrigen Druck des Rauchgases ergibt, erschwert die Abscheidung des $CO_2$. Der Volumenstrom des Rauchgases ist beträchtlich, es werden große Mengen an Wasser benötigt, um das Rauchgas zu kühlen, bevor es zur $CO_2$-Abscheidungsanlage geleitet wird, und der Strom enthält Verbindungen, die zum unerwünschten Abbau eines Amin-Waschmittels oder zur Korrosion der Ausrüstung führen können. Der Energiebedarf zur Desorption des $CO_2$ aus dem Absorbens ist bei einer Amin-Wäsche des Rauchgases ebenfalls höher als bei einer Amin-Wäsche des Synthesegases. Im Allgemeinen ist die Kohlendioxid-Abscheidung aus dem Rauchgas weniger energie- und kosteneffizient als die Kohlendioxid-Abscheidung aus dem Synthesegas, was das Erreichen einer hohen Kohlenstoffabscheidungsrate zu einer ökologischen und wirtschaftlichen Herausforderung macht.

Der genannte Artikel von Collodi weist den Nachteil auf, dass kein detailliertes Dampfreformierungsverfahren angegeben wird, das die erörterten Umstände berücksichtigt.

Die PCT-Veröffentlichung WO 2010/018550 A1 beschreibt ein neuartiges Design der Dampfreformereinheit, bei dem der größte Teil der gesamten $CO_2$-Emissionen der Dampfreformierungsanlage in den Synthesegasstrom bzw. Rohwasserstoffstrom verlagert wird, während die $CO_2$-Emissionen aus dem Rauchgas des Reformerofens minimiert werden. Dadurch können etwa 85 % der gesamten Kohlendioxid-Emissionen Synthesegasstrom abgeschieden werden, wobei eine Aminwäsche-Technologie zum Einsatz kommt. Da die $CO_2$-Abscheidung aus dem Hochdruck-Synthesegasstrom viel einfacher und kostengünstiger sei als die aus dem Niederdruck-Reformerofenabgasstrom, ergäbe sich dem offenbarten Verfahren ein Kostenvorteil.

Jedoch wird bei dem vorgeschlagenen Verfahren die Wasserstoff-Rückgewinnungseffizienz der enthaltenen PSA-Anlage künstlich reduziert, um einen Teil der Wasserstoff-Produktion als Brennstoff zu verwenden, wodurch die Menge an Erdgas, die als Brennstoff benötigt wird, reduziert wird und der Anteil an Kohlendioxid, der aus dem Synthesegas abgeschieden werden kann, erhöht wird. Dadurch wird die Wasserstoffproduktion reduziert oder die gesamte Dampfreformierungseinheit muss entsprechend vergrößert werden, um die gleiche Menge an Wasserstoff zu produzieren.

In dem Artikel "Start-up of Port-Jeröme CRYOCAP Plant: Optimized Cryogenic CO2 Capture from H2 Plants", Energy Procedia 114 (2017), pp. 2682 - 2689, beschreiben D. Pichot et al. die $CO_2$-Abscheidung aus dem PSA-Restgas in einer Dampfreformierungsanlage zur Reinwasserstofferzeugung mittels des CRYOCAP-Verfahrens. Hierbei wird der überwiegende Anteil des PSA- Restgases verdichtet und in einer kryogen betriebenen $CO_2$-Trennkolonne kondensiert. Das dabei als Sumpfprodukt erhaltene Rein-Kohlendioxid kann gelagert werden oder es wird nach optionaler weiterer Verdichtung, Trocknung und Reinigung an externe Verbraucher, beispielsweise aus der Lebensmittelindustrie, abgegeben. Der Kopfproduktstrom der $CO_2$-Trennkolonne wird mittels Membrantrennung weiter gereinigt, wobei ein wasserstoffreicher Permeatstrom erhalten wird, der zu der PSA-Anlage zurückgeführt wird und somit ebenfalls für die Reinwasserstofferzeugung genutzt wird. Der Retentatstrom der Membrantrennung enthält brennbare Bestandteile und wird daher als Heizgas zu den Brennern des Reformerofens zurückgeführt. Jedoch können in ähnlicher Weise wie bei dem Synthesegas auch aus dem PSA-Restgas maximal höchstens ca. 60 % der gesamten $CO_2$-Emissionen abgeschieden werden. Ferner bietet das beschriebene Verfahren trotz der beschriebenen Vorteile keine Lösung zur Kohlendioxid-Abscheidung aus dem Reformerofen-Rauchgas an.

Somit ist trotz der Diskussion verschiedener Ansätze zur Verringerung der Kohlendioxid-Emissionen aus Dampfreformierungsanlagen im Schrifttum ersichtlich, dass weiterhin Bedarf an detaillierten technischen Lehren zur $CO_2$-Abscheidung in Dampfreformierungsanlagen mit hoher Abscheiderate besteht, die insbesondere bei der Erzeugung von Reinwasserstoff eine effektive und effiziente Abtrennung von Kohlendioxid ermöglichen, ohne dass hiermit eine große Einschränkung der Produktion des Reinwasserstoffs verbunden ist.

## Beschreibung der Erfindung

Die Aufgabe der vorliegenden Erfindung besteht daher darin, ein Verfahren und eine Anlage zum Herstellen von Reinwasserstoff durch Dampfreformierung von Kohlenwasserstoffen mit reduzierter Kohlendioxid-Emission anzugeben, die die erwähnten Nachteile des Stands der Technik nicht aufweisen.

Diese Aufgabe wird in einem ersten Aspekt durch ein Verfahren mit den Merkmalen des Anspruchs 1 und mit einer Anlage mit den Merkmalen des Anspruchs 16 gelöst. Weitere Ausgestaltungen der Erfindung ergeben sich aus den Unteransprüchen der jeweiligen Kategorie.

Unter einem Dampfreformierungsverfahren mit reduzierter Kohlendioxid-Emission wird ein entsprechendes Verfahren verstanden, das gegenüber einem vergleichbaren Verfahren mit derselben Produktionskapazität an Reinwasserstoff eine geringere Gesamtemission an Kohlendioxid aufweist. Für die Bilanzierung der Kohlendioxid-Emissionen ist es dabei bedeutend, sowohl direkte als auch indirekte $CO_2$-Emissionen zu betrachten.

Die direkten $CO_2$-Emissionen von Dampfreformierungsverfahren sind auf zwei Quellen zurückzuführen:

(a) Die Bildung von Kohlendioxid infolge der bei der Dampfreformierung ablaufenden chemischen Reaktionen, ausgedrückt als Gesamt-Umsatzgleichung am Beispiel des Erdgases mit der Hauptkomponente Methan:

$$CH_4 + 2\,H_2O = CO_2 + 4\,H_2$$

Pro kg erzeugten Wasserstoffs werden auf diese Weise 5,5 kg Kohlendioxid gebildet.

(b) Kohlendioxid-Emissionen, die auf die Wärmeerzeugung für die endotherm verlaufende Dampfreformierung zurückzuführen sind, wobei deren Menge unter anderem von der Menge exportierten Dampfs abhängt. Für ein Dampfreformierungsverfahren mit einem niedrigem Dampfexport von 0,2 kg Dampf pro $m_N^3$ erzeugten Wasserstoffs fallen auf diese Weise 3,5 kg Kohlendioxid pro kg erzeugten Wasserstoffs an, bei höherem Dampfexport von 1,2 kg Dampf pro $m_N^3$ erzeugten Wasserstoffs fallen 5,0 kg Kohlendioxid pro kg erzeugten Wasserstoffs an.

Die direkten $CO_2$-Emissionen von Dampfreformierungsverfahren berechnen sich demnach beispielsweise zu 10,5 kg Kohlendioxid pro kg erzeugten Wasserstoffs.

Die indirekten $CO_2$-Emissionen von Dampfreformierungsverfahren gehen im Wesentlichen auf den Verbrauch elektrischer Energie und von Dampf innerhalb des Dampfreformierungsverfahren zurück. So werden beispielsweise für die Regenerierung beladener Absorptionsmittel beträchtliche Mengen an Heizdampf verbraucht. Dieser Dampf kann somit nicht exportiert werden und es entfällt daher eine ansonsten für dieses Nebenprodukt erhaltene $CO_2$-Gutschrift. Die Erzeugung von elektrischer Energie und von Dampf außerhalb des Dampfreformierungsverfahrens ist ebenfalls mit $CO_2$-Emissionen verbunden, die daher als indirekte $CO_2$-Emissionen betrachtet werden.

Die Dampfreformierungsbedingungen bzw. CO-Konvertierungsbedingungen sind dem Fachmann aus dem Stand der Technik, beispielsweise den eingangs erörterten Dokumenten, bekannt. Es sind diejenigen physikalisch-chemischen Bedingungen, unter denen ein messbarer, bevorzugt ein technisch relevanter Umsatz von Kohlenwasserstoffen zu Synthesegasprodukten (Dampfreformierung) bzw. von Kohlenmonoxid und Wasserdampf zu Kohlendioxid und Wasserstoff gemäß der oben wiedergegebenen Umsatzgleichung erzielt wird. Notwendige Anpassungen dieser Bedingungen an die jeweiligen Betriebserfordernisse, beispielsweise hinsichtlich der Edukt-Volumenströme, Drücke, Reaktionstemperaturen, insbesondere die Dampfreformierungseintrittstemperatur, Art und Menge der verwendeten Katalysatoren, wird er auf der Grundlage von Routineversuchen vornehmen. Dabei können ggf. offenbarte, spezifische Reaktionsbedingungen als Orientierung dienen, sie sind aber in Bezug auf den Umfang der Erfindung nicht einschränkend zu verstehen.

Unter einem physikalischen oder chemischen Kohlendioxid-Abscheideverfahren wird im Rahmen der vorliegenden Offenbarung ein Verfahren verstanden, das es ermöglicht, dass ein Fluidgemisch, beispielsweise ein Gasgemisch, durch Anwendung geeigneter physikalisch-chemischer Bedingungen, beispielsweise durch Phasenübergang wie Kondensation oder durch Verwendung eines geeigneten Sorbens in seine Bestandteile aufgetrennt bzw. unerwünschte Komponenten aus diesem Gemisch abgetrennt werden können. Wenn ein Sorptionsverfahren angewandt wird, kann dieses auf einer Adsorption, also einer Bindung des oder der abzutrennenden Stoffe an eine Oberfläche oder Grenzfläche des festen Adsorbens, oder auf einer Absorption, also einer Aufnahme des oder der abzutrennenden Stoffe in das Volumen des flüssigen oder festen Absorbens, beruhen. Der oder die abgetrennten und mittels Sorption gebundenen Stoffe werden als Ad- bzw. Absorbat bezeichnet. Die dabei wirkenden Bindungskräfte können physikalischer oder chemischer Art sein. Entsprechend wirken bei der physikalischen Sorption zumeist schwächere, unspezifischere Bindungskräfte, z. B. van-der-Waals-Kräfte, wohingegen bei der chemischen Sorption stärkere, spezifischere Bindungskräfte wirken und das Ad- bzw. Absorbat und/oder das Ad- bzw. Absorbens chemisch verändert wird.

Als Synonyme für den Begriff des Absorbens werden im Rahmen dieser Offenbarung die Begriffe Absorptionsmittel bzw. Waschmittel im Falle flüssiger Absorptionsmittel verwendet.

Ein spezifisches, physikalisches Absorptionsverfahren stellt die Gaswäsche mit tiefkaltem Methanol dar, das als Absorbens oder Waschmittel Methanol verwendet, dessen Temperatur mittels kälteerzeugender Verfahren unter die Umgebungstemperatur, bevorzugt unter 0 °C, meist bevorzugt unter - 30 °C abgekühlt wurde. Dieses Verfahren ist dem Fachmann unter der Bezeichnung Rectisol-Verfahren bekannt.

Die an sich bekannten und häufig zur Absorption von Kohlendioxid verwendeten Aminwäschen beruhen dagegen auf chemischer Absorption (Chemisorption) und erreichen schon bei relativ niedrigen Drücken in der Absorptionskolonne hohe Reinheiten. Die Selektivität ist ebenfalls meist höher als bei physikalischen Absorptionsverfahren.

Bei der Aminwäsche werden leicht alkalische wässrige Lösungen von Aminen, häufig Ethanolamin-Derivate, in einer zumeist als Waschkolonne ausgestalteten Absorptionseinheit (Absorptionsteil) eingesetzt. Die Absorption erfolgt dabei bei niedriger Temperatur, z. B. 40 °C und leicht erhöhtem Druck, z. B. 8 bara. Frisches bzw. regeneriertes Absorptionsmittel wird hierbei am Kopf der Kolonne aufgegeben und der aufzutrennende Gasstrom im unteren Bereich der Waschkolonne eingeleitet. Hierbei wird Kohlendioxid reversibel chemisch absorbiert. Das an Kohlendioxid abgereicherte Gas verlässt die Kolonne am Kopf und das beladene Waschmittel wird am Sumpf der Kolonne ausgeleitet und in einen Desorptionsteil geführt, der ebenfalls häufig als Trennkolonne ausgestaltet ist. In der Desorptionskolonne (Regenerierungsteil) wird bei höherer Temperatur und niedrigerem Druck die Reaktion das chemische Gleichgewicht umgekehrt und somit das absorbierte Kohlendioxid als Gas freigesetzt. Es kann sodann am Kopf der Desorptionskolonne ausgeleitet und einer weiteren Nutzung oder Entsorgung zugeführt werden. Das auf diese Weise regenerierte Absorptionsmittel wird zum Absorptionsteil zurückgeführt.

Ein bei der Aminwäsche häufig verwendetes Absorptionsmittel ist Methyldiethanolamin (MDEA), das zumeist in wässrigen Lösungen verwendet wird. Zusätzlich werden häufig Aktivatoren, beispielsweise Piperazin zugesetzt, um die Kohlendioxid-Absorption zu beschleunigen, wie es beispielsweise in dem Artikel "The Activator Mechanism of Piperazine in Aqueous Methyldiethanolamine Solutions", J. Ying et al., Energy Procedia 114 (2017), pp. 2078 - 2087, beschrieben wird. Diese Gemische werden dann als aktivierte MDEA-Lösungen (aMDEA) bezeichnet.

Unter einem Verfahren zur kryogenen Kohlendioxid-Abtrennung wird ein Verfahren verstanden, in dem Kohlendioxid durch Abkühlen kondensiert und somit aus einem Gas abgetrennt werden kann. Insbesondere wird hierunter ein $CO_2$-Abtrennungsverfahren verstanden, wie es in dem oben genannten Artikel von D. Pichot et al. beschrieben wird.

Unter Fluidverbindung zwischen zwei Bereichen der erfindungsgemäßen Vorrichtung wird dabei jegliche Art von Verbindung verstanden, die es ermöglicht, dass ein Fluid, beispielsweise ein Gasstrom, von dem einen zu dem anderen der beiden Bereiche strömen kann, unbeachtlich etwaiger zwischengeschalteter Bereiche oder Bauteile. Insbesondere wird unter einer direkten Fluidverbindung jegliche Art von Verbindung verstanden, die es ermöglicht, dass ein Fluid, beispielsweise ein Gasstrom, von direkt dem einen zu dem anderen der beiden Bereiche strömen kann, wobei keine weiteren Bereiche oder Bauteile zwischengeschaltet sind, mit Ausnahme reiner Transportvorgänge und der dazu benötigten Mittel, beispielsweise Rohrleitungen, Ventile, Pumpen, Verdichter, Vorratsbehälter. Ein Beispiel wäre eine Rohrleitung, die direkt dem einen zu dem anderen der beiden Bereiche führt.

Unter einem Mittel wird eine Sache verstanden, die die Erreichung eines Zieles ermöglicht oder dabei behilflich ist. Insbesondere werden unter Mitteln zum Durchführen eines bestimmten Verfahrensschrittes alle diejenigen physischen Gegenstände verstanden, die der Fachmann in Betracht ziehen würde, um diesen Verfahrensschritt durchführen zu können. Beispielsweise wird der Fachmann als Mittel zum Einleiten oder Ausleiten eines Stoffstroms alle Transport- und Fördervorrichtungen, also z. B. Rohrleitungen, Pumpen, Verdichter, Ventile, in Betracht ziehen, die ihm aufgrund seines Fachwissens zur Durchführung dieses Verfahrensschrittes notwendig oder sinnvoll erscheinen.

Alle etwaigen Druckangaben erfolgen als Absolutdruckeinheiten, abgekürzt bara, oder als Überdruckeinheiten, abgekürzt barg, wenn im jeweiligen Einzelzusammenhang nichts anderes angegeben wird.

Für die Zwecke dieser Beschreibung ist Dampf synonym mit Wasserdampf zu verstehen, sofern es nicht im Einzelfall anders angegeben wird.

Der Erfindung liegt die Erkenntnis zugrunde, dass es vorteilhaft ist, Kohlendioxid sowohl aus dem abgekühlten konvertierten Synthesegasstrom als auch aus dem Reformerofen-Rauchgas mittels geeigneter Kohlendioxid-Abscheideverfahren abzutrennen. Diese Konfiguration ergibt einen geringeren Betriebsmittelverbrauch, einen geringeren Energieverbrauch, eine bessere Energieeffizienz, geringere indirekte Emissionen und höhere Kohlendioxid-Abscheideraten als beispielsweise Dampfreformierungsverfahren, bei dem Kohlendioxid nur aus dem Rauchgas allein abgetrennt wird. Trotz der höheren Investitionen ist diese Konfiguration daher sinnvoll. Sie bietet zudem höhere Flexibilität bei den Investitionen: So kann die Vorrichtung für die Kohlendioxid-Abscheidung aus dem abgekühlten konvertierten Synthesegasstrom zuerst installiert werden, um die Vorteile einer möglichen tiefen Prozessintegration bei einem Neubau einer Dampfreformierungsanlage zu nutzen, oder für den Fall, dass der Kohlendioxid-Emissionspreis die Kohlendioxid-Abscheidung aus dem Synthesegas rechtfertigt, aber der Emissionspreis immer noch zu niedrig ist, um die Investition in die zweite Kohlendioxid-Abscheidevorrichtung für das Rauchgas zu rechtfertigen.

## Bevorzugte Ausgestaltungen der Erfindung

Ein zweiter Aspekt des erfindungsgemäßen Verfahrens ist dadurch gekennzeichnet, dass der Einsatzgasstrom mittels eines oder mehrerer Verfahren vorbehandelt wird, die ausgewählt werden aus folgender Gruppe: Entschwefelung unter Entschwefelungsbedingungen, Vorreformierung unter Vorreformierungsbedingungen.

Ein dritter Aspekt des erfindungsgemäßen Verfahrens ist dadurch gekennzeichnet, dass der zu der ersten Wärmerückgewinnungsvorrichtung geleitete erste Kühlmittelstrom einen oder mehrere Fluidströme umfasst, die ausgewählt werden aus folgender Gruppe:

- Wasser und/oder wässriges Kondensat, wobei ein erster Dampfstrom erzeugt wird,
- Kesselspeisewasser, wobei ein vorgewärmter Kesselspeisewasserstrom erzeugt wird,
- Kohlenwasserstoffe enthaltendes Einsatzgas, wobei ein vorgewärmter Einsatzgasstrom erzeugt wird.

Hierdurch kann der Enthalpiegehalt des Rohsynthesegasstroms genutzt werden, um Dampf zu erzeugen, Kesselspeisewasser vorzuwärmen oder einen vorgewärmten Einsatzgasstrom bereitzustellen oder mehrere dieser Maßnahmen durchzuführen. Auf diese Weise wird die Energieeffizienz des Verfahrens weiter verbessert.

Ein vierter Aspekt des erfindungsgemäßen Verfahrens ist dadurch gekennzeichnet, dass der zu der zweiten Wärmerückgewinnungsvorrichtung geleitete zweite Kühlmittelstrom einen oder mehrere Fluidströme umfasst, die ausgewählt werden aus folgender Gruppe:

- Wasser und/oder wässriges Kondensat, wobei ein zweiter Dampfstrom erzeugt wird,
- Kesselspeisewasser, wobei ein vorgewärmter Kesselspeisewasserstrom erzeugt wird,
- Kohlenwasserstoffe enthaltendes Einsatzgas, wobei ein vorgewärmter Einsatzgasstrom erzeugt wird,
- PSA-Restgasstrom, wobei ein vorgewärmter PSA-Restgasstrom erzeugt wird,
- ein mit Kohlendioxid beladener Absorptionsmittelstrom.

Hierdurch kann der Enthalpiegehalt des konvertierten Synthesegasstroms genutzt werden, um Dampf zu erzeugen, Kesselspeisewasser vorzuwärmen, einen vorgewärmten Einsatzgasstrom bereitzustellen, einen vorgewärmten PSA-Restgasstrom bereitzustellen oder mehrere dieser Maßnahmen durchzuführen. Alternativ oder zusätzlich kann der Enthalpiegehalt des konvertierten Synthesegasstroms genutzt werden, um einen mit Kohlendioxid beladenen Absorptionsmittelstrom vorzuwärmen und somit die Regenerierung des Absorptionsmittels zu unterstützen. Durch diese Maßnahmen wird die Energieeffizienz des Verfahrens weiter verbessert.

Ein fünfter Aspekt des erfindungsgemäßen Verfahrens ist dadurch gekennzeichnet, dass die CO-Konvertierungsanlage und die zweite Wärmerückgewinnungsvorrichtung baulich und/oder funktional zusammenfallen. Dies kann beispielsweise auf die Weise erfolgen, dass der konvertierte Synthesegasstrom vor seinem Austritt aus der CO-Konvertierungsanlage durch indirekten Wärmetausch mit dafür vorgesehenen, in die CO-Konvertierungsanlage integrierten Wärmetauschern so effektiv abgekühlt werden kann, dass auf eine separate zweite Wärmerückgewinnungsvorrichtung verzichtet werden kann. Als Kühlmittelströme können insbesondere die mit dem vierten Aspekt der Erfindung diskutierten Fluidströme verwendet werden. Dies spart Aufstellungsplatz, minimiert Energieverluste in den Leitungen und es entfällt die zweite Wärmerückgewinnungsvorrichtung als separates Ausrüstungsteil. Durch diese Maßnahmen wird die Energieeffizienz des Verfahrens weiter verbessert.

Ein sechster Aspekt des erfindungsgemäßen Verfahrens ist dadurch gekennzeichnet, dass die CO-Konvertierungsanlage als gekühlter Reaktor ausgestaltet ist und der zweite Kühlmittelstrom oder einer oder mehrere der von ihm umfassten Fluidströme zur Reaktorkühlung verwendet werden. Insbesondere ist bei dieser Ausgestaltung vorgesehen, nicht oder nicht nur den konvertierten Synthesegasstrom vor seinem Austritt aus der CO-Konvertierungsanlage zu kühlen, sondern bereits die Reaktionszone, beispielsweise das Katalysatorbett der CO-Konvertierungsanlage zu kühlen, so dass im Idealfall ein isothermer Reaktor oder ein sich diesem annähernder Reaktortyp realisiert wird. Vorteilhaft ist dabei die Möglichkeit einer optimierten Temperaturführung des Reaktorteils der CO-Konvertierungsanlage, wodurch sich der erzielte Umsatz zum Zielprodukt Wasserstoff weiter erhöht. Ferner wird durch diese Maßnahmen die Energieeffizienz des Verfahrens weiter verbessert, indem die im Zusammenhang mit dem fünften Aspekt der Erfindung erhaltenen Vorteile somit ebenfalls realisiert werden.

Ein siebter Aspekt des erfindungsgemäßen Verfahrens ist dadurch gekennzeichnet, dass die erste Kohlendioxid-Abscheidevorrichtung gemäß mindestens eines Kohlendioxid-Abscheideverfahrens arbeitet, das ausgewählt wird aus folgender Gruppe:

(a) Absorption mit einem für Kohlendioxid selektiven physikalischen oder chemischen Absorptionsmittel,
(b) Adsorption mit einem für Kohlendioxid selektiven Adsorbens,
(c) Membrantrennung mit einer für Kohlendioxid selektiven Membran.

Die genannten Kohlendioxid-Abscheideverfahren sind dem Fachmann an sich bekannt und er wird auf Grundlage der herrschenden Randbedingungen ein geeignetes Verfahren auswählen. So eignet sich die Adsorption mit einem für Kohlendioxid selektiven Adsorbens besonders dann, wenn die Kohlendioxid-Konzentration bereits sehr klein ist, beispielsweise im Spurenbereich. Absorptionsverfahren und Membrantrennverfahren sind eher für größere Konzentrationen bzw. Partialdrücke von Kohlendioxid geeignet. Besonders günstig sind Absorptionsverfahren dann anwendbar, wenn die Kohlendioxid-Absortion schnell verläuft, die Absorptionskapazität des Waschmittels groß ist, das verwendete Waschmittel hochselektiv für Kohlendioxid ist und die Desorption des Kohlendioxids zur Regenerierung des Waschmittels ebenfalls leicht möglich ist. Dies ist beispielsweise bei chemisorptiven Waschmitteln auf Aminbasis, beispielsweise aMDEA-Basis, der Fall.

Ein achter Aspekt des erfindungsgemäßen Verfahrens ist dadurch gekennzeichnet, dass die erste Kohlendioxid-Abscheidevorrichtung als kontinuierlich betreibbare Aminwäsche ausgestaltet ist und einen Absorptionsteil und einen Regenerierungsteil umfasst, wobei die Regenerierung des mit Kohlendioxid beladenen Waschmittels im Regenerierungsteil erfolgt:

- mit Heizdampf, wobei mindestens ein Teil des ersten und/oder des zweiten Dampfstroms als Heizdampf verwendet wird, und/oder
- mit mindestens einem Teil des konvertierten Synthesegasstroms.

Hierdurch kann der Enthalpiegehalt des konvertierten Synthesegasstroms genutzt werden, um das mit Kohlendioxid beladene Waschmittel im Regenerierungsteil zu regenerieren. Die Verwendung eines Teils des ersten und/oder des zweiten Dampfstroms als Heizdampf zu Regenerierung des Waschmittels besitzt den Vorteil, dass der Import von Heizdampf von außerhalb des Verfahrens entsprechend verringert wird. Auf diese Weise wird die Energieeffizienz des Verfahrens weiter verbessert. Die Ausgestaltung der ersten Kohlendioxid-Abscheidevorrichtung als kontinuierlich betreibbare Aminwäsche ist deshalb vorteilhaft, weil der Kohlendioxid-Partialdruck an dieser Stelle des Verfahrens vergleichsweise hoch ist, beispielsweise im Vergleich mit dem Kohlendioxid-Partialdruck im Dampfreformierungsrauchgas. Absorptionsverfahren sind daher hier besser geeignet als Adsorptionsverfahren. Die Verwendung von Waschmitteln auf Aminbasis weist ferner die im Zusammenhang mit dem siebten Aspekt der Erfindung diskutierten Vorteile auf.

Ein neunter Aspekt des erfindungsgemäßen Verfahrens ist dadurch gekennzeichnet, dass die erste Kohlendioxid-Abscheidevorrichtung als kontinuierlich betreibbare Aminwäsche ausgestaltet ist und aktiviertes Methyldiethanolamin (aMDEA) als Waschmittel verwendet wird. Insbesondere bei einer Ausgestaltung des Verfahrens gemäß des achten Aspekts werden hierdurch die im dortigen Zusammenhang diskutierten Vorteile erhalten.

Ein zehnter Aspekt des erfindungsgemäßen Verfahrens ist dadurch gekennzeichnet, dass die zweite Kohlendioxid-Abscheidevorrichtung gemäß mindestens eines Kohlendioxid-Abscheideverfahrens arbeitet, das ausgewählt wird aus folgender Gruppe:

(a) Absorption mit einem für Kohlendioxid selektiven chemischen Absorptionsmittel,
(b) Adsorption mit einem für Kohlendioxid selektiven Adsorbens,
(c) Membrantrennung mit einer für Kohlendioxid selektiven Membran,

(d) kryogene Kohlendioxid-Abtrennung.

Das in die die zweite Kohlendioxid-Abscheidevorrichtung eintretende Dampfreformierungsrauchgas weist einen vergleichsweise niedrigen Kohlendioxid-Partialdruck an dieser Stelle des Verfahrens auf, beispielsweise im Vergleich mit dem Kohlendioxid-Partialdruck im konvertierten Synthesegasstrom. Daher sind hier chemisorptive Verfahren zur Kohlendioxid-Abscheidung besser geeignet als physisorptive Verfahren, da letztere besser bei hohen Kohlendioxid-Partialdrücken arbeiten. Gut geeignet zur Kohlendioxid-Abtrennung bei niedrigen Kohlendioxid-Partialdrücken sind dagegen vor allem auch die Adsorption und die kryogene Kohlendioxid-Abtrennung, wobei unter letzterer ein Verfahren zu verstehen ist, wie es in dem oben erörterten Artikel von D. Pichot et al. beschrieben wird.

Ein elfter Aspekt des erfindungsgemäßen Verfahrens ist dadurch gekennzeichnet, dass die erste Kohlendioxid-Abscheidevorrichtung so ausgestaltet und betrieben wird, dass in ihr mindestens 40 %, bevorzugt mindestens 50 % der direkten Kohlendioxid-Emissionen des Gesamtverfahrens abgeschieden werden und dass die zweite Kohlendioxid-Abscheidevorrichtung so ausgestaltet und betrieben wird, dass der gesamte Abscheidegrad der direkten Kohlendioxid-Emissionen des Gesamtverfahrens mindestens 89 % beträgt. Dadurch wird die gleiche hohe Abscheiderate erreicht wie bei dem Verfahren gemäß Stand der Technik, bei dem die $CO_2$-Emissionen nur aus dem Rauchgas abgeschieden werden, während der Energie- und Betriebsmittelverbrauch deutlich reduziert wird.

Ein zwölfter Aspekt des erfindungsgemäßen Verfahrens ist dadurch gekennzeichnet, dass die erste und zweite Kohlendioxid-Abscheidevorrichtung so ausgestaltet und betrieben werden, dass die Summe der im Gesamtverfahren erzeugten Dampfströme größer ist als die Mengenströme des verbrauchten Heizdampfs zur Regenerierung der Kohlendioxid-Abscheidevorrichtungen. Hierdurch kann der im Verfahren erzeugte Eigendampf zur Regenerierung der Kohlendioxid-Abscheidevorrichtungen verwendet werden, wobei ein Teil der erzeugten Dampfströme trotzdem noch für den Export verbleibt.

Ein dreizehnter Aspekt des erfindungsgemäßen Verfahrens ist dadurch gekennzeichnet, dass der spezifische Dampfverbrauch zur Regenerierung der Kohlendioxid-Abscheidevorrichtungen pro kg abgeschiedenes Kohlendioxid kleiner als 1,0 kg ist. Untersuchungen haben gezeigt, dass es möglich ist, den spezifischen Dampfverbrauch zur Regenerierung der Kohlendioxid-Abscheidevorrichtungen auf diesen Wertebereich zu begrenzen, wobei trotzdem eine ausreichende Regenerierungsleistung der Kohlendioxid-Abscheidevorrichtungen erhalten wird, beispielsweise in Bezug auf die Regenerierung der Waschmittel, falls eine physikalische oder chemische Absorption verwendet wird. Die Energieeffizienz des Gesamtverfahrens mit Kohlendioxid-Abscheidung wird ebenfalls verbessert, was sich an den geringeren indirekten Gesamtemissionen in Verbindung mit dem Energieverbrauch in Form von elektrischer Energie oder Wärme bzw. Dampf zeigt.

Ein vierzehnter Aspekt des erfindungsgemäßen Verfahrens ist dadurch gekennzeichnet, dass der erste und der zweite Kohlendioxid-Reichstrom mindestens einer gemeinsamen Aufbereitungsstufe zugeführt werden, die ausgewählt wird aus folgender Gruppe:

-   gemeinsamer Kohlendioxid-Trockner,
-   gemeinsamer Kohlendioxid-Verdichter,
-   gemeinsame Kohlendioxid-Verflüssigungsvorrichtung.

Auf diese Weise werden die Aufbereitungsstufen und die darin enthaltenen Vorrichtungen gemeinsam genutzt, wodurch Synergieeffekte erhalten werden. Ferner wird eine Vergleichmäßigung des von der jeweiligen Aufbereitungsstufe abgegebenen Kohlendioxid-Produktstroms ermöglicht, insbesondere im Rahmen von Anfahr-, Abfahr- oder Lastwechselvorgängen der Anlage.

Ein fünfzehnter Aspekt des erfindungsgemäßen Verfahrens ist dadurch gekennzeichnet, dass das Verfahren in zwei zeitlich getrennten Betriebsabschnitten betrieben wird, wobei im ersten Betriebsabschnitt nur die erste Kohlendioxid-Abscheidevorrichtung betrieben wird und im zweiten Betriebsabschnitt die erste Kohlendioxid-Abscheidevorrichtung und die zweite Kohlendioxid-Abscheidevorrichtung betrieben wird. Vorteilhaft ist es dabei, dass im ersten Betriebsabschnitt nur die erste Kohlendioxid-Abscheidevorrichtung betrieben werden kann, wenn der Kohlendioxid-Emissionspreis die Kohlendioxid-Abscheidung aus dem Synthesegas rechtfertigt, aber der Emissionspreis immer noch zu niedrig ist, um auch den Betrieb der zweiten Kohlendioxid-Abscheidevorrichtung für das Rauchgas zu rechtfertigen. Dies erhöht die technische und ökonomische Flexibilität des Verfahrens.

In einem siebzehnten Aspekt der Erfindung ist die Anlage so ausgestaltet, dass

-   die erste Kohlendioxid-Abscheidevorrichtung als kontinuierlich Aminwäsche mit aktiviertem Methyldiethanolamin (aMDEA) als Waschmittel betreibbar ist und einen Absorptionsteil und einen Regenerierungsteil umfasst, wobei:
-   die Regenerierung des mit Kohlendioxid beladenen Waschmittels im Regenerierungsteil mit Heizdampf und/oder mit mindestens einem Teil des konvertierten Synthesegasstroms als Wärmeträgerfluid erfolgt,
-   die zweite Kohlendioxid-Abscheidevorrichtung als kontinuierlich Aminwäsche betreibbar ist und einen Absorptionsteil und einen Regenerierungsteil umfasst, wobei die Regenerierung des mit Kohlendioxid beladenen Waschmittels im Regenerierungsteil mit Heizdampf erfolgt,

- mindestens ein Teil des ersten und/oder des zweiten Dampfstroms als Heizdampf verwendet wird.

Die Vorteile dieses Aspekts der erfindungsgemäße Anlage entsprechen denen der analogen Ausgestaltungen des erfindungsgemäßen Verfahrens.

Ein achtzehnter Aspekt der Erfindung betrifft ein Verfahren zum Nachrüsten einer existierenden Anlage zum Herstellen von Reinwasserstoff durch Dampfreformierung zur Reduzierung der Kohlendioxid-Emissionen, dadurch gekennzeichnet, dass das Nachrüsten in zwei zeitlich getrennten Ausbaustufen erfolgt, wobei in der ersten Ausbaustufe nur die erste Kohlendioxid-Abscheidevorrichtung installiert wird und in der zweiten Ausbaustufe zusätzlich die zweite Kohlendioxid-Abscheidevorrichtung installiert wird. So kann die Vorrichtung für die Kohlendioxid-Abscheidung aus dem abgekühlten konvertierten Synthesegasstrom zuerst installiert werden, um die Vorteile einer möglichen tiefen Prozessintegration bei einem Neubau einer Dampfreformierungsanlage zu nutzen, oder für den Fall, dass der Kohlendioxid-Emissionspreis die Kohlendioxid-Abscheidung aus dem Synthesegas rechtfertigt, aber der Emissionspreis immer noch zu niedrig ist, um die Investition in die zweite Kohlendioxid-Abscheidevorrichtung für das Rauchgas zu rechtfertigen. Dies erhöht die technische und ökonomische Flexibilität der Anlage und ihrer Verwendung.

Ein neunzehnter Aspekt der Erfindung betrifft die Verwendung einer Anlage gemäß des ersten oder siebzehnten Aspekts der Erfindung zum Herstellen von Reinwasserstoff durch Dampfreformierung mit reduzierter Kohlendioxid-Emission.

**Ausführungsbeispiel**

Weiterbildungen, Vorteile und Anwendungsmöglichkeiten der Erfindung ergeben sich auch aus der nachfolgenden Beschreibung von Ausführungsbeispielen und der Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:

Fig. 1 ein erstes Beispiel eines Dampfreformierungsverfahrens bzw. einer entsprechenden Anlage gemäß Stand der Technik zum Herstellen von Reinwasserstoff ohne Kohlendioxid-Abtrennung,

Fig. 2 ein zweites Beispiel eines Dampfreformierungsverfahrens bzw. einer entsprechenden Anlage gemäß Stand der Technik zum Herstellen von Reinwasserstoff mittels Dampfreformierung und mit Kohlendioxid-Abtrennung aus dem Reformerofen-Rauchgas,

Fig. 3 ein drittes Beispiel eines Dampfreformierungsverfahrens bzw. einer entsprechenden Anlage gemäß Stand der Technik zum Herstellen von Reinwasserstoff mittels Dampfreformierung und mit Kohlendioxid-Abtrennung aus dem Rohsynthesegas,

Fig. 4 ein erstes Beispiel eines Dampfreformierungsverfahrens bzw. einer entsprechenden Anlage gemäß Erfindung zum Herstellen von Reinwasserstoff mittels Dampfreformierung und mit Kohlendioxid-Abtrennung aus dem Rohsynthesegas und dem Reformerofen-Rauchgas,

Fig. 5 ein zweites Beispiel eines Dampfreformierungsverfahrens bzw. einer entsprechenden Anlage gemäß Erfindung zum Herstellen von Reinwasserstoff mittels Dampfreformierung und mit Kohlendioxid-Abtrennung aus dem Rohsynthesegas und dem Reformerofen-Rauchgas.

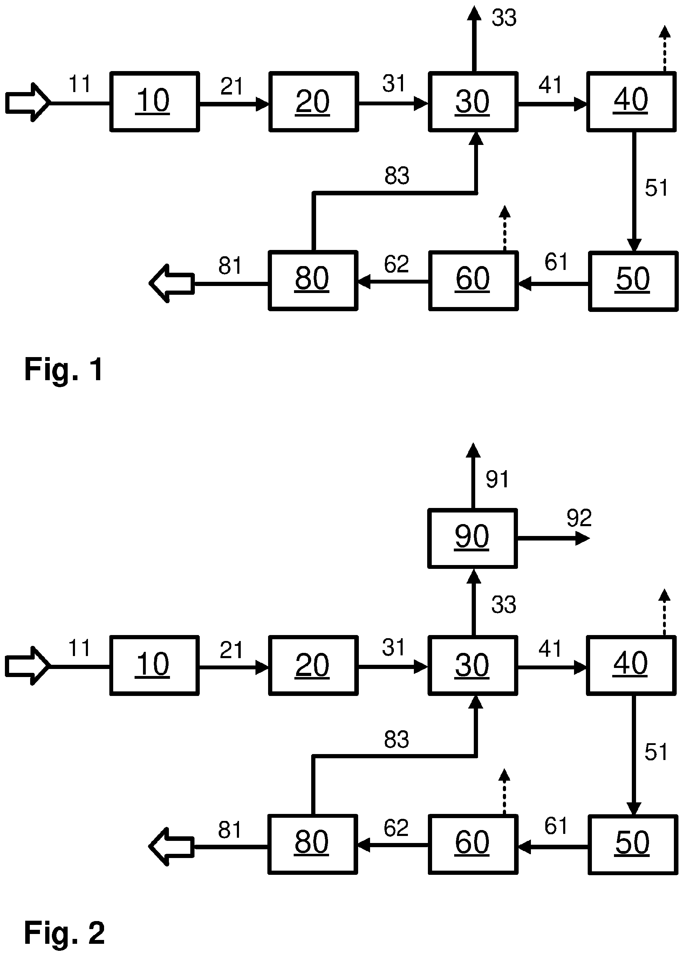

Fig. 1 zeigt ein erstes Beispiel eines Dampfreformierungsverfahrens bzw. einer entsprechenden Anlage gemäß Stand der Technik zum Herstellen von Reinwasserstoff ohne Kohlendioxid-Abtrennung.

Ein über Leitung 11 in das Verfahren bzw. die Anlage eingeleiteter Kohlenwasserstoff-Einsatzgasstrom, vorzugsweise methanreiches Erdgas, wird zunächst in einem Hydrodesulfurierungsreaktor (HDS) 10 behandelt, um Schwefel und Schwefelverbindungen zu entfernen, die sonst die nachgeschalteten Katalysatoren vergiften würden. Der entschwefelte Einsatzgasstrom wird über Leitung 21 ausgeleitet, mit Dampf gemischt und in einen Vorreformierungsreaktor (Prereformer) 20 geleitet, wo höhere Kohlenwasserstoffe in $C_1$-Verbindungen umgewandelt werden, um das Hochtemperatur-Cracken dieser höheren Kohlenwasserstoffe in späteren Schritten des Verfahrens zu vermeiden.

Der vorreformierte Kohlenwasserstoff-Einsatzgasstrom wird über Leitung 31 ausgeleitet, mit Dampf in einer überstöchiometrischen Menge gemischt und in einen Dampfreformierungsreaktor (Hauptreformierungsstufe) 30 eingeleitet, der mit Katalysator gefüllte Reformerrohre und einen Reformerofen umfasst. Die Dampf-Methan-Reformierungsreaktion verläuft stark endotherm, daher wird die Wärme für die Reaktion durch die Verbrennung eines oder mehrerer Brenngase mit Luft im Ofen bereitgestellt. Dabei kann ein Teil des Kohlenwasserstoff-Einsatzgasstrom als ein Brenngas dienen, weitere Brenngase können aus brennbaren Rückführströmen gewonnen werden, die innerhalb des Verfahrens erhalten werden. Die in den Brennern des Reformerofens erzeugte Wärme wird dann durch Strahlung auf die mit Katalysator gefüllten Reformerrohre übertragen, wo der vorreformierte Kohlenwasserstoff-Einsatzgasstrom mit Dampf bei hoher Temperatur in einen Rohsynthesegasstrom umgewandelt werden, der hauptsächlich aus Wasserstoff, Kohlenmonoxid und Kohlendioxid sowie Wasserdampf besteht und noch Anteile nicht umgesetzter Kohlenwasserstoffe enthält. Dieser Rohsynthesegasstrom wird dann über Leitung 41 aus dem Dampfreformierungsreaktor 30 ausgeleitet, einer ersten Wärmerückgewinnungsvorrichtung 40 zugeführt und in dieser gekühlt, wobei ein erster Dampfstrom erzeugt wird, was durch einen gestrichelten Pfeil angedeutet wird.

Der abgekühlte Rohsynthesegasstrom wird über Leitung 51 aus der ersten Wärmerückgewinnungsvorrichtung 40 ausgeleitet und einer CO-Konvertierungsanlage 50 zugeführt, die einen oder mehrere CO-Konvertierungsstufen umfasst, die jeweils einen oder mehrere separate Reaktoren (Wassergas-Shift-Reaktoren) oder Katalysatorbetten umfassen können. In der CO-Konvertierungsanlage wird verbleibendes Kohlenmonoxid durch Reaktion mit Wasserdampf in zusätzlichen Wasserstoff umgesetzt, wobei als Koppelprodukt Kohlendioxid entsteht. Da die CO-Konvertierung exotherm verläuft, wird der konvertierte Synthesegasstrom sodann über Leitung 61 aus der CO-Konvertierungsanlage 50 ausgeleitet und einer zweiten Wärmerückgewinnungsvorrichtung 60 zugeführt und in dieser gekühlt, wobei ein zweiter Dampfstrom erzeugt wird, was durch einen gestrichelten Pfeil angedeutet wird.

Der abgekühlte konvertierte Synthesegasstrom wird über Leitung 62 aus der zweiten Wärmerückgewinnungsvorrichtung 60 ausgeleitet und einer als Druckwechseladsorptionsanlage (PSA-Anlage) ausgestalteten Wasserstoffanreicherungsvorrichtung 80 zugeführt, in der ein Reinwasserstoff-Produktstrom gewonnen und über Leitung 81 als Zielprodukt ausgeleitet wird. Ferner wird mindestens ein PSA-Restgasstrom erhalten, der Kohlenmonoxid, Kohlendioxid, nicht umgesetztes Methan und Wasserstoff enthält. Er wird über Leitung 83 aus der PSA-Anlage ausgeleitet und als weiterer Brenngasstrom den Brennern des Reformerofens zugeführt.

Bei der Verbrennung des oder der Brenngasströme mit Verbrennungsluft im Reformerofen wird ein Rauchgasstrom erzeugt, der über Leitung 33 ausgeleitet und beispielsweise an die Umgebung abgegeben wird. Nachteilig ist es dabei, dass der Rauchgasstrom die gesamten Kohlendioxid-Emissionen des Verfahrens enthält, die somit ungemindert in die Umwelt entlassen werden. Dies ist vor dem Hintergrund immer strenger werdender Emissionsbestimmungen für Treibhausgase wie Kohlendioxid problematisch. Nachteilig ist es dabei ferner, dass der Partialdruck von Kohlendioxid im Dampfreformierungs-Rauchgas klein ist; da aber der Rauchgasstrom vergleichsweise groß ist, ist die emittierte Menge an Kohlendioxid trotzdem beträchtlich.

Fig. 2 zeigt daher ein zweites Beispiel eines Dampfreformierungsverfahrens bzw. einer entsprechenden Anlage gemäß Stand der Technik zum Herstellen von Reinwasserstoff mittels Dampfreformierung und mit Kohlendioxid-Abtrennung aus dem Reformerofen-Rauchgas. Die Bestandteile des Verfahrens bzw. der Anlage sowie ihre Funktion und Eigenschaften entsprechenden denjenigen der Fig. 1 mit gleichem Bezugszeichen.

Gegenüber der Fig. 1 tritt in Fig. 2 eine Kohlendioxid-Abscheidevorrichtung 90 hinzu, die der Kohlendioxid-Abscheidung aus dem Rauchgas dient und der der Dampfreformierungs-Rauchgasstrom über Leitung 33 zugeführt wird. Die Kohlendioxid-Abscheidung erfolgt dabei beispielsweise mittels eines oder mehrerer der nachfolgend genannten gemäß mindestens Kohlendioxid-Abscheideverfahren:

(a) Absorption mit einem für Kohlendioxid selektiven chemischen Absorptionsmittel,
(b) Adsorption mit einem für Kohlendioxid selektiven Adsorbens,
(c) Membrantrennung mit einer für Kohlendioxid selektiven Membran,
(d) kryogene Kohlendioxid-Abtrennung.

Das in die die zweite Kohlendioxid-Abscheidevorrichtung eintretende Dampfreformierungsrauchgas weist einen vergleichsweise niedrigen Kohlendioxid-Partialdruck an dieser Stelle des Verfahrens auf, beispielsweise im Vergleich mit dem Kohlendioxid-Partialdruck im konvertierten Synthesegasstrom. Dies erschwert die Kohlendioxid-Abscheidung und es müssen große Rauchgasströme behandelt werden. Daher sind hier chemisorptive Verfahren zur Kohlendioxid-Abscheidung besser geeignet als physisorptive Verfahren, da letztere besser bei hohen Kohlendioxid-Partialdrücken arbeiten. Gut geeignet zur Kohlendioxid-Abtrennung bei niedrigen Kohlendioxid-Partialdrücken sind dagegen vor allem auch die Adsorption und die kryogene Kohlendioxid-Abtrennung, wobei unter letzterer ein Verfahren zu verstehen ist, wie es in dem oben erörterten Artikel von D. Pichot et al. beschrieben wird.

In Fig. 2 wird aus der Kohlendioxid-Abscheidevorrichtung 90 über Leitung 91 ein an Kohlendioxid abgereicherter Rauchgasstrom ausgeleitet. Ferner wird über Leitung 92 ein Kohlendioxid-Reichstrom ausgeleitet, der sodann der Lagerung, Aufarbeitung oder Weiterverarbeitung zugeführt wird (bildlich nicht gezeigt.)

Bei der Kohlendioxid-Abscheidung aus dem Dampfreformierungs-Rauchgas bestehen zahlreiche Nachteile. Der niedrige Partialdruck des Kohlendioxids, der sich aus der Kombination von geringer Kohlendioxid-Konzentration und niedrigem Druck des Rauchgases ergibt, erschwert die Abscheidung des Kohlendioxids. Der Volumenstrom des Rauchgases ist beträchtlich und es werden große Mengen an Wasser benötigt, um das Rauchgas zu kühlen, bevor es zur Kohlendioxid-Abscheidungsanlage geleitet wird, und der Rauchgasstrom kann ferner acide Verbindungen, beispielsweise Schwefeldioxid oder Stickstoffoxide enthalten, die zum Abbau eines Absorbens auf Aminbasis oder zur Korrosion der Anlage führen können. Der Energiebedarf zur Desorption des Kohlendioxids aus dem beladenen Absorptionsmittel ist beispielsweise bei einer Ausgestaltung als Aminwäsche für das Rauchgas ebenfalls höher als bei einer Aminwäsche zur Kohlendioxid-Abscheidung aus dem Synthesegas. Im Allgemeinen ist eine Aminwäsche zur Kohlendioxid-Abscheidung aus dem Rauchgas weniger energie- und kosteneffizient als eine Anlage zur Kohlendioxid-Abscheidung aus dem Synthesegas. Betrachtet man die indirekten Emissionen, die mit dem Verbrauch von Dampf oder Strom verbunden sind, wird deutlich, dass eine weniger energieeffiziente Lösung zur Kohlendioxid-Abscheidung auch zu höheren indirekten Emissionen führt.

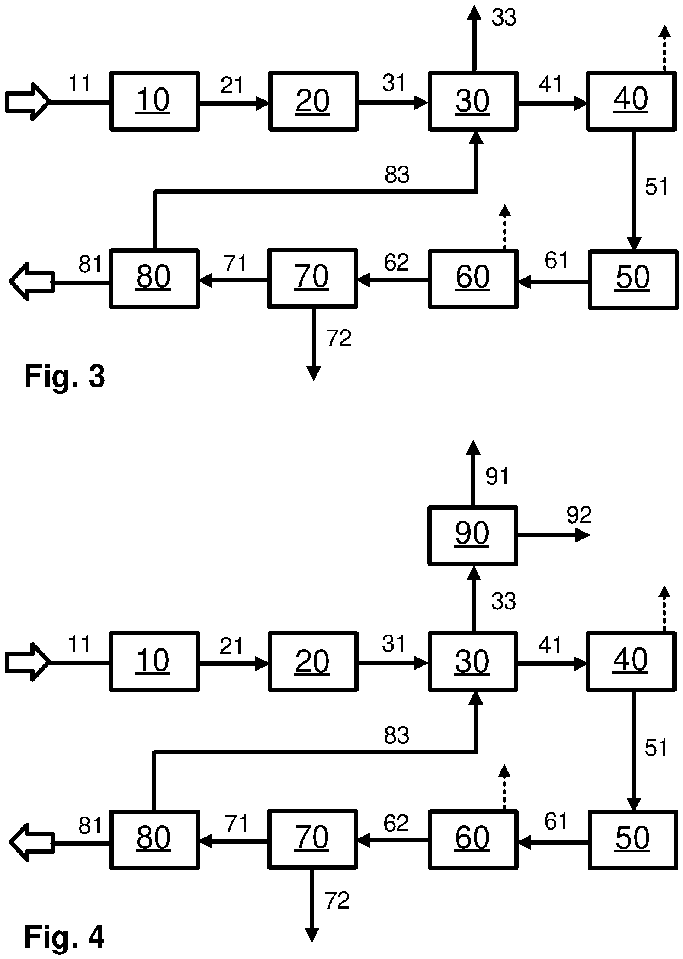

Fig. 3 zeigt ein drittes Beispiel eines Dampfreformierungsverfahrens bzw. einer entsprechenden Anlage gemäß Stand der Technik zum Herstellen von Reinwasserstoff mittels Dampfreformierung und mit Kohlendioxid-Abtrennung aus dem Rohsynthesegas. Die Bestandteile des Verfahrens bzw. der Anlage sowie ihre Funktion und Eigenschaften entsprechenden denjenigen der Fig. 1 und 2 mit gleichem Bezugszeichen.

Gegenüber der Fig. 1 tritt in Fig. 3 eine Kohlendioxid-Abscheidevorrichtung 70 hinzu, die der Kohlendioxid-Abscheidung aus dem abgekühlten konvertierte Synthesegasstrom dient, der über Leitung 62 herangeführt und in diese eingeleitet wird. Die Kohlendioxid-Abscheidung aus dem abgekühlten konvertierten Synthesegasstrom erfolgt dabei beispielsweise mittels eines oder mehrerer der nachfolgend genannten gemäß mindestens Kohlendioxid-Abscheideverfahren:

(a) Absorption mit einem für Kohlendioxid selektiven physikalischen oder chemischen Absorptionsmittel,
(b) Adsorption mit einem für Kohlendioxid selektiven Adsorbens,
(c) Membrantrennung mit einer für Kohlendioxid selektiven Membran.

Die genannten Kohlendioxid-Abscheideverfahren sind dem Fachmann an sich bekannt und er wird auf Grundlage der herrschenden Randbedingungen ein geeignetes Verfahren auswählen. So eignet sich die Adsorption mit einem für Kohlendioxid selektiven Adsorbens besonders dann, wenn die Kohlendioxid-Konzentration bereits sehr klein ist, beispielsweise im Spurenbereich. Absorptionsverfahren und Membrantrennverfahren sind eher für größere Konzentrationen bzw. Partialdrücke von Kohlendioxid geeignet. Besonders günstig sind Absorptionsverfahren dann anwendbar, wenn die Kohlendioxid-Absorption schnell verläuft, die Absorptionskapazität des Waschmittels groß ist, das verwendete Waschmittel hochselektiv für Kohlendioxid ist und die Desorption des Kohlendioxids zur Regenerierung des Waschmittels ebenfalls leicht möglich ist. Dies ist beispielsweise bei chemisorptiven Waschmitteln auf Aminbasis, beispielsweise aMDEA-Basis, der Fall.

Der Nachteil der Kohlenstoffabscheidung allein aus dem Synthesegas besteht darin, dass diese Ströme nur 55 bis 65 % der direkten $CO_2$-Emissionen beitragen und dass die Abscheidungsrate mit diesen Einheiten allein daher ca. 60 % nicht überschreiten kann. Ferner führt die Kohlendioxid-Abscheidung aus dem Synthesegas auch dazu, dass der Dampfreformierungsanlage Enthalpie entzogen wird und die Wärmezufuhr zum Reformerofen reduziert wird, mit der Folge, dass die Dampfproduktion verringert wird.

Fig. 4 zeigt ein erstes Beispiel eines Dampfreformierungsverfahrens bzw. einer entsprechenden Anlage gemäß der Erfindung zum Herstellen von Reinwasserstoff mittels Dampfreformierung und mit Kohlendioxid-Abtrennung aus dem Rohsynthesegas und dem Reformerofen-Rauchgas. Die Bestandteile des Verfahrens bzw. der Anlage sowie ihre Funktion und Eigenschaften entsprechenden denjenigen der Fig. 1 bis 3 mit gleichem Bezugszeichen.

Gegenüber der Fig. 1 tritt in Fig. 4 eine Kohlendioxid-Abscheidevorrichtung 90 (zweite Kohlendioxid-Abscheidevorrichtung) hinzu, die der Kohlendioxid-Abscheidung aus dem Rauchgas dient und der der Dampfreformierungs-Rauchgasstrom über Leitung 33 zugeführt wird. Die Kohlendioxid-Abscheidung erfolgt dabei beispielsweise mittels eines oder mehrerer der nachfolgend genannten gemäß mindestens Kohlendioxid-Abscheideverfahren:

(a) Absorption mit einem für Kohlendioxid selektiven chemischen Absorptionsmittel,
(b) Adsorption mit einem für Kohlendioxid selektiven Adsorbens,
(c) Membrantrennung mit einer für Kohlendioxid selektiven Membran,
(d) kryogene Kohlendioxid-Abtrennung.

Das in die die zweite Kohlendioxid-Abscheidevorrichtung eintretende Dampfreformierungsrauchgas weist einen vergleichsweise niedrigen Kohlendioxid-Partialdruck an dieser Stelle des Verfahrens auf, beispielsweise im Vergleich mit dem Kohlendioxid-Partialdruck im konvertierten Synthesegasstrom. Dies erschwert die Kohlendioxid-Abscheidung und es müssen große Rauchgasströme behandelt werden. Daher sind hier chemisorptive Verfahren zur Kohlendioxid-Abscheidung besser geeignet als physisorptive Verfahren, da letztere besser bei hohen Kohlendioxid-Partialdrücken arbeiten. Gut geeignet zur Kohlendioxid-Abtrennung bei niedrigen Kohlendioxid-Partialdrücken sind dagegen vor allem auch die Adsorption und die kryogene Kohlendioxid-Abtrennung, wobei unter letzterer ein Verfahren zu verstehen ist, wie es in dem oben erörterten Artikel von D. Pichot et al. beschrieben wird.

Gegenüber der Fig. 1 tritt in Fig. 4 ferner eine Kohlendioxid-Abscheidevorrichtung 70 (erste Kohlendioxid-Abscheidevorrichtung) hinzu, die der Kohlendioxid-Abscheidung aus dem abgekühlten konvertierte Synthesegasstrom dient, der über Leitung 62 herangeführt und in diese eingeleitet wird. Die Kohlendioxid-Abscheidung aus dem abgekühlten konvertierten Synthesegasstrom erfolgt dabei beispielsweise mittels eines oder mehrerer der nachfolgend genannten Kohlendioxid-Abscheideverfahren:

(a) Absorption mit einem für Kohlendioxid selektiven physikalischen oder chemischen Absorptionsmittel,
(b) Adsorption mit einem für Kohlendioxid selektiven Adsorbens,
(c) Membrantrennung mit einer für Kohlendioxid selektiven Membran.

Die genannten Kohlendioxid-Abscheideverfahren sind dem Fachmann an sich bekannt und er wird auf Grundlage der herrschenden Randbedingungen ein geeignetes Verfahren auswählen. So eignet sich die Adsorption mit einem für Kohlendioxid selektiven Adsorbens besonders dann, wenn die Kohlendioxid-Konzentration bereits sehr klein ist, beispielsweise im Spurenbereich. Absorptionsverfahren und Membrantrennverfahren sind eher für größere Konzentrationen bzw. Partialdrücke von Kohlendioxid geeignet. Besonders günstig sind Absorptionsverfahren dann anwendbar, wenn die Kohlendioxid-Absorption schnell verläuft, die Absorptionskapazität des Waschmittels groß ist, das verwendete Waschmittel hochselektiv für Kohlendioxid ist und die Desorption des Kohlendioxids zur Regenerierung des Waschmittels ebenfalls leicht möglich ist. Dies ist beispielsweise bei chemisorptiven Waschmitteln auf Aminbasis, beispielsweise aMDEA-Basis, der Fall.

Von besonderem Vorteil sind bildlich nicht gezeigte, sogenannte integrierte Ausgestaltungen des Verfahrens bzw. der Anlage gemäß der Erfindung, bei denen die erste und/oder die zweite Kohlendioxid-Abscheidevorrichtung gemäß eines physikalischen oder chemischen Absorptionsverfahrens oder eines Adsorptionsverfahrens oder Kombinationen dieser Verfahren arbeitet und zur thermischen Regenerierung der verwendeten, beladenen Absorptionsmittel oder Adsorptionsmittel einer oder mehrere heiße Verfahrensströme, beispielsweise ein Teil des heißen Synthesegasstroms oder ein Teil des heißen Rauchgasstroms, bevorzugt ein Teil des heißen Synthesegasstroms, verwendet wird. Hierdurch kann mindestens ein Teil des üblicherweise zur thermischen Regenerierung verwendeten Heizdampfs eingespart werden, so dass die Energieeffizienz des Verfahrens oder der Anlage weiter verbessert wird und sich auch das Verhältnis von produziertem zu verbrauchtem Dampf verbessert. So kann beispielsweise der Regenerierungsteil einer ersten Kohlendioxid-Abscheidevorrichtung, die auf Basis von Chemisorption mit aMDEA-haltigem Waschmittel arbeitet, mit mindestens einem Teil des heißen konvertierten Synthesegasstroms beheizt werden, der hierdurch selber abgekühlt wird. Der mindestens eine Teil des heißen konvertierten Synthesegasstroms kann dazu beispielsweise als eine Wärmequelle im Aufkocher einer Desorptionskolonne im Regenerierungsteil der ersten Kohlendioxid-Abscheidevorrichtung genutzt werden.

Eine weitere Abkühlung des konvertierten Synthesegasstroms kann beispielsweise durch indirekten Wärmetausch mit kalten Verfahrensmedien, beispielsweise dem Kohlenwasserstoff-Einsatzgasstrom erfolgen. Ferner können auf diese Weise Frischwasser, beispielsweise demineralisiertes Wasser, oder im Verfahren anfallendes Prozesskondensat vorgewärmt und oder verdampft werden, um die Dampferzeugung zu unterstützen. Hierdurch kann auf apparativ aufwändige Kühlvorrichtungen, beispielsweise Luftkühler, verzichtet werden oder diese können kleiner gestaltet werden. Die Energieeffizienz des Gesamtverfahrens wird somit weiter verbessert.

Als weitere oder alternative Wärmequelle zur Vorheizung von kalten Verfahrensmedien und/oder zur Dampferzeugung aus Frischwasser und/oder Prozesskondensat kann auch der Enthalpiegehalt des heißen Dampfreformierungs-Rauchgases dienen. Ferner können sowohl ein heißer Verfahrensstrom, beispielsweise der konvertierte Synthesegasstrom oder der heiße Dampfreformierungs-Rauchgasstrom, zur thermischen Entgasung wässriger Medien in einer Entgasungsvorrichtung (Deaerator) verwendet werden. Auch hierdurch wird die Energieeffizienz des Gesamtverfahrens weiter verbessert.

Die erste Kohlendioxid-Abscheidevorrichtung 70 und die zweite Kohlendioxid-Abscheidevorrichtung 90 wirken insbesondere dann in vorteilhafter Weise zusammen, wenn die erste Kohlendioxid-Abscheidevorrichtung so ausgestaltet und betrieben wird, dass in ihr mindestens 40 %, bevorzugt mindestens 50 % der direkten Kohlendioxid-Emissionen des Gesamtverfahrens abgeschieden werden und dass die zweite Kohlendioxid-Abscheidevorrichtung so ausgestaltet und betrieben wird, dass der gesamte Abscheidegrad der direkten Kohlendioxid-Emissionen des Gesamtverfahrens mindestens 89 % beträgt. Untersuchungen zeigen, dass bei dieser Ausgestaltung ein besonders energieeffizientes Verfahren erhalten wird. Hierbei wird ausgenutzt, dass der in die erste Kohlendioxid-Abscheidevorrichtung eintretende konvertierte Synthesegasstrom im Vergleich zum Rauchgasstrom einen höheren Druck aufweist, beispielsweise 20 bis 35 bara, in einem Beispiel 25 bara, im Vergleich zu atmosphärischem oder leicht darüber liegendem Druck, beispielsweise 1,1 bara, im Rauchgas. Hierdurch wird die Kohlendioxid-Abscheidung erleichtert, da der Kohlendioxid-Partialdruck höher ist als derjenige im Rauchgas, so dass die Kohlendioxid-Abscheidung beispielsweise mittels Absorption, Adsorption oder Membrantrennung unterstützt wird und die hierzu benötigten Vorrichtungen kleiner ausgestaltet werden können. Die Abtrennung weiterer Kohlendioxids kann dann in einfacher Weise aus dem Dampfreformierungs-Rauchgas mittels der zweiten Kohlendioxid-Abscheidevorrichtung erfolgen.

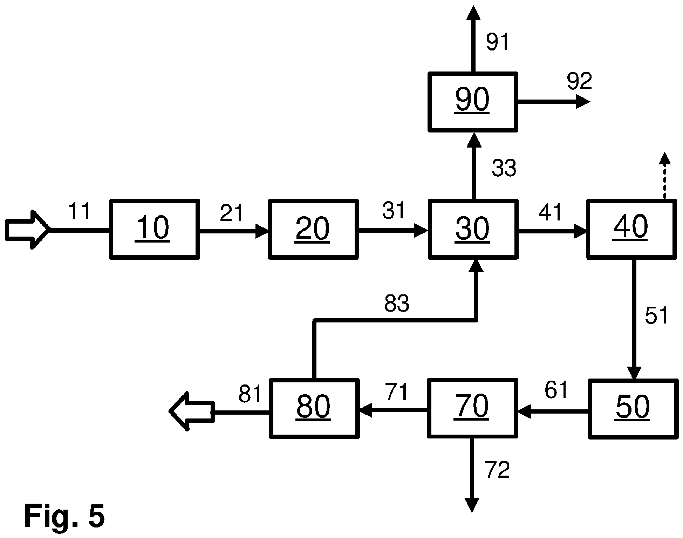

Fig. 5 zeigt ein zweites Beispiel eines Dampfreformierungsverfahrens bzw. einer entsprechenden Anlage gemäß Erfindung zum Herstellen von Reinwasserstoff mittels Dampfreformierung und mit Kohlendioxid-Abtrennung aus dem Rohsynthesegas und dem Reformerofen-Rauchgas. Die Bestandteile des Verfahrens bzw. der Anlage sowie ihre Funktion und Eigenschaften entsprechenden denjenigen der Fig. 1 bis 4 mit gleichem Bezugszeichen. Es handelt sich hier wieder um eine integrierte Ausgestaltung des Verfahrens bzw. der Anlage.

Gegenüber der Fig. 4 ergibt sich als Änderung, dass die zweite Wärmerückgewinnungsvorrichtung 60 entfällt, da die CO-Konvertierungsanlage und die zweite Wärmerückgewinnungsvorrichtung baulich und/oder funktional zusammenfallen. Dies kann beispielsweise auf die Weise erfolgen, dass der konvertierte Synthesegasstrom vor seinem Austritt aus der CO-Konvertierungsanlage durch indirekten Wärmetausch mit dafür vorgesehenen, in die CO-Konvertierungsanlage integrierten Wärmetauschern so effektiv abgekühlt werden kann, dass auf eine separate zweite Wärmerückgewinnungsvorrichtung verzichtet werden kann. Als Kühlmittelströme können insbesondere die mit dem vierten Aspekt der Erfindung diskutierten Fluidströme verwendet werden. Dies spart Aufstellungsplatz, minimiert Energieverluste in den Leitungen und es entfällt die zweite Wärmerückgewinnungsvorrichtung als separates Ausrüstungsteil. Durch diese Maßnahmen wird die Energieeffizienz des Verfahrens weiter verbessert.

In einer Weiterentwicklung der zuletzt erörterten Ausgestaltung umfasst die CO-Konvertierungsanlage mehrere Stufen, die bei in Strömungsrichtung des Synthesegases abnehmender Temperatur betrieben werden, also beispielsweise eine Hochtemperatur (HTS)-, Mitteltemperatur (MTS)- oder Tieftemperatur (LTS)-Shift bzw. -Konvertierung umfassen. Es können in einem weiteren Beispiel auch nur zwei der genannten Verfahrensstufen umfasst sein. In einem Beispiel wird das Rohsynthesegas auf eine Temperatur im Bereich von 180 °C bis 220 °C abgekühlt, bevor es in einen isothermen oder gekühlten Tieftemperatur-Shift-(LTS) oder Mitteltemperatur-Shift-(MTS)-Reaktor geleitet wird, die als Wärmeaustauschreaktor ausgebildet sind, in denen die exotherme Wassergas-Shift-Reaktion (CO-Konvertierung) stattfindet und das konvertierte Synthesegas gleichzeitig durch einen Strom mit geeigneter Temperatur gekühlt wird, wie z. B. ein Kohlenwasserstoff-Einsatzgasstrom, Kesselspeisewasser, PSA-Restgas oder eine Kombination solcher Ströme. Das gekühlte konvertierte Synthesegas tritt sodann mit einer Temperatur aus der CO-Konvertierungsanlage aus, die niedrig genug ist, um es direkt als Heizmedium in den Aufkocher des Regenerierungsteils der ersten und oder zweiten Kohlendioxid-Abscheidevorrichtung zu leiten, die in einem Beispiel als Aminwäsche ausgestaltet sind. In einem Beispiel kann vor dem Eingang des Heizmediums in den Aufkocher des Regenerierungsteils zusätzlich eine Quenchkühlung vorgesehen werden, um die Temperatur am Eingang des Aufkochers so zu steuern, dass die Temperatur des Heizmediums einen bestimmten Grenzwert nicht überschreitet, um eine thermische Zersetzung der als Absorbens verwendeten Aminlösung zu verhindern.

Die bessere Wärmenutzung in den integrierten Ausgestaltungen führt zu einem geringeren Verhältnis von Dampfverbrauch zur Dampfproduktion der Dampfreformierungsanlage. Dies verbessert gleichzeitig den Gesamtabscheidegrad an Kohlendioxid, wenn auch die indirekten Emissionen berücksichtigt werden, die beispielsweise durch die Reduktion des benötigten Heizdampfs eingespart werden. Ferner werden teure und einen hohen Platzbedarf zur Aufstellung aufweisende Ausrüstungsgegenstände wie beispielsweise Luftkühler eingespart.

**Zahlenbeispiele**

In der nachfolgenden Tabelle werden für eine Dampfreformierungsanlage (SMR) mit festgelegter Wasserstoff-Produktion verschiedene Betriebsfälle gemäß Erfindung (Fälle 5c, 5d, 5e, 5f, 5g) mit einem Betrieb ohne Kohlendioxid-Abscheidung (Fall 5a, Stand der Technik) bzw. Kohlendioxid-Abscheidung nur aus dem Dampfreformierungs-Rauchgas (Fall 5b, Stand der Technik) verglichen.

Erläuterungen zur Tabelle:

KA: Kohlendioxid-Abscheidung / Kohlendioxid-Abscheidevorrichtung.
Fälle 5c, 5d, 5e, 5f, 5g: Erste Kohlendioxid-Abscheideanlage als aMDEA-Wäsche, zweite Kohlendioxid-Abscheideanlage als Amin-Wäsche.
Fälle 5f, 5g: Erste Kohlendioxid-Abscheideanlage als 2-stufiger Absorber mit aMDEA-Wäsche, zweite Kohlendioxid-Abscheideanlage als Amin-Wäsche.

Parameter-Definitionen:

CO$_2$-Abscheidegrad: Nur direkte Emissionen (%) (2):
Abgeschiedene CO$_2$-Menge bezogen auf Summe aus (abgeschiedener CO$_2$-Menge + emittierter CO$_2$-Menge):

CO2 capture rate (on Case x) [in %] = (CO2 captured (on Case x))/(CO2 captured (on Case x)+CO2 emitted (on Case x))

CO2-Abscheidegrad: Direkte + indirekte Emissionen + Dampfgutschrift (%) (9):
Abgeschiedene CO$_2$-Menge bezogen auf Summe aus (abgeschiedener CO$_2$-Menge + indirekter CO$_2$-Emission für Dampferzeugung + indirekter CO$_2$-Emission für Stromerzeugung + Gutschrift für Dampf als CO$_2$-Äquivalent).
Spezifischer Dampfverbrauch (kg Dampf / kg CO$_2$abgeschieden) (3):
Dampfverbrauch erste + zweite KA bezogen auf abgeschiedene CO$_2$-Menge:

Specific steam consumption [(kg steam)/(kg CO2 captured)] = (Steam consumption of CC unit 1 (syngas)+Steam consumption of CC unit 2 (flue gas))/(CO2 captured by CC unit 1+CO2 captured by CC unit 2)

Spezifische indirekte Emissionen (kg CO$_2$eq / kg CO$_2$ abgeschieden):
Indirekte Emissionen für erste + zweite KA für Dampferzeugung und Stromerzeugung als CO2-Äquivalent, bezogen auf abgeschiedene CO$_2$-Menge.

| | Fall 5a: SMR ohne KA (Fig. 1) (Vergleich) | Fall 5b: KA nur aus Rauchgas (Fig. 2) (Vergleich) | Fall 5c: KA aus Syngas und Rauchgas, nicht integr., 90% CO2 Abscheidung (Fig. 4) (Erfindung) | Fall 5d: KA aus Syngas und Rauchgas, integriert, 90% CO2 Abscheidung (Fig. 4/5) (Erfindung) | Fall 5e: KA aus Syngas und Rauchgas, integriert, 75% CO2 Abscheidung (Fig. 4/5) (Erfindung) | Fall 5f: KA aus Syngas (2-stufig) und Rauchgas, nicht integr., 90% CO2 Abscheidung (Fig. 4) (Erfindung) | Fall 5g KA aus Syngas (2-stufig) und Rauchgas, integriert, 90% CO2 Abscheidung (Fig. 4/5) (Erfindung) |
|---|---|---|---|---|---|---|---|
| H2-Produktion (Nm3/h) | 100000 | 100000 | 100000 | 100000 | 100000 | 100000 | 100000 |
| Erdgas Feed (kmol/h) | 1483 | 1483 | 1483 | 1483 | 1483 | 1483 | 1483 |
| Erdgas gesamt (kmol/h) | 1876 | 1876 | 1750 | 1747 | 1747 | 1753 | 1754 |
| Dampfexport SMR (kg/h) | 100286 | 100286 | 60097 | 61123 | 61123 | 60105 | 61027 |
| Leistungsaufnahme SMR (kW) | 2202 | 2202 | 1791 | 1726 | 1726 | 1753 | 1753 |
| Dampfverbrauch (kg/h) erste KA | | 0 | 57542 | 34102 | 34102 | 26566 | 2858 |
| Leistungsaufnahme (kW) erste KA | | 0 | 5501 | 5419 | 5419 | 5485 | 5434 |
| Dampfverbrauch (kg/h) zweite KA | | 107561 | 39883 | 40319 | 33599 | 39883 | 40319 |
| Leistungsaufnahme (kW) zweite KA | | 9784 | 3628 | 3668 | 3056 | 3628 | 3668 |
| CO2-Abscheidegrad: Nur direkte Emissionen (%) (2) | | 90,0% | 95,8% | 96,0% | 89,9% | 95,8% | 96,0% |
| CO2-Abscheidegrad: Direkte + indirekte E. + Dampfgutschrift (%) (9) | | 83,6% | 82,9% | 87,9% | 84,0% | 89,3% | 95,0% |
| Spez. Dampfverbrauch (kg Dampf / kg CO2 abgeschieden) (3) | | 1,34 | 1,22 | 0,93 | 0,90 | 0,83 | 0,54 |
| Spez. indirekte Emissionen (kg CO2 eq / kg CO2 abgeschieden) | | 0,36 | 0,33 | 0,26 | 0,26 | 0,24 | 0,18 |

| | Fall 5a: SMR ohne KA (Fig. 1) (Vergleich) | Fall 5b: KA nur aus Rauchgas (Fig. 2) (Vergleich) | Fall 5c: KA aus Syngas und Rauchgas, nicht integr., 90% CO2 Abscheidung (Fig. 4) (Erfindung) | Fall 5d: KA aus Syngas und Rauchgas, integriert, 90% CO2 Abscheidung (Fig. 4/5) (Erfindung) | Fall 5e: KA aus Syngas und Rauchgas, integriert, 75% CO2 Abscheidung (Fig. 4/5) (Erfindung) | Fall 5f: KA aus Syngas (2-stufig) und Rauchgas, nicht integr., 90% CO2 Abscheidung (Fig. 4) (Erfindung) | Fall 5g KA aus Syngas (2-stufig) und Rauchgas, integriert, 90% CO2 Abscheidung (Fig. 4/5) (Erfindung) |
|---|---|---|---|---|---|---|---|
| Verhältnis Dampfverbrauch zu Dampfproduktion (kg / kg) | | 1,07 | 1,62 | 1,22 | 1,11 | 1,11 | 0,71 |

EP 4 098 609 A1

**Bezugszeichenliste**

[10]    Hydrodesulfurierungsreaktor
[11]    Leitung
[20]    Vorreformierungsreaktor
[21]    Leitung
[30]    Hauptreformierungsstufe
[31]    Leitung
[33]    Leitung
[40]    erste Wärmerückgewinnungsvorrichtung
[41]    Leitung
[50]    CO-Konvertierungsanlage
[51]    Leitung
[60]    zweite Wärmerückgewinnungsvorrichtung
[61]    Leitung
[62]    Leitung
[70]    erste Kohlendioxid-Abscheidevorrichtung
[71]    Leitung
[72]    Leitung
[80]    Wasserstoffanreicherungsvorrichtung
[81]    Leitung
[83]    Leitung
[90]    zweite Kohlendioxid-Abscheidevorrichtung
[91]    Leitung
[92]    Leitung

**Patentansprüche**

1. Verfahren zum Herstellen von Reinwasserstoff durch Dampfreformierung eines Kohlenwasserstoffe enthaltenden Einsatzgases mit reduzierter Kohlendioxid-Emission, umfassend folgende Schritte:

(a) Bereitstellen eines gasförmige oder verdampfte Kohlenwasserstoffe, vorzugsweise Erdgas oder Naphtha, enthaltenden Einsatzgasstroms,

(b) Einleiten des auf eine Dampfreformierungseintrittstemperatur erhitzten Einsatzgasstroms in eine Hauptreformierungsstufe, Umsetzen des Einsatzgasstroms in der Hauptreformierungsstufe unter Dampfreformierungsbedingungen in einer Vielzahl von mit einem festen, partikelförmigen Reformierungskatalysator gefüllten Reformerrohren zu einem Wasserstoff, Kohlenmonoxid, Kohlendioxid und nicht umgesetzte Kohlenwasserstoffe enthaltendem Rohsynthesegasstrom, wobei die Reformerrohre in einem Reformerofen angeordnet sind, dessen Innenraum mittels einer Vielzahl von Brennern beheizt wird, wobei ein Dampfreformierungsrauchgasstrom gebildet wird, und wobei die Dampfreformierungsbedingungen die Zugabe von Dampf zu dem Kohlenwasserstoffe enthaltenden Einsatzgas und das Einstellen eines definierten Dampf/Kohlenstoff-Verhältnisses umfassen,

(c) Ausleiten des Rohsynthesegasstroms aus der Hauptreformierungsstufe und Einleiten des Rohsynthesegasstroms in eine erste Wärmerückgewinnungsvorrichtung, Abkühlen des Rohsynthesegasstroms in der ersten Wärmerückgewinnungsvorrichtung im indirekten Wärmetausch mit einem ersten Kühlmittelstrom, Ausleiten des abgekühlten Rohsynthesegasstroms aus der ersten Wärmerückgewinnungsvorrichtung,

(d) Einleiten des abgekühlten Rohsynthesegasstroms in eine CO-Konvertierungsanlage, umfassend mindestens eine CO-Konvertierungsstufe, Umsetzen des in die CO-Konvertierungsanlage eingeleiteten abgekühlten Rohsynthesegasstroms unter CO-Konvertierungsbedingungen zu einem konvertierten Synthesegasstrom, Ausleiten des konvertierten Synthesegasstroms, der gegenüber dem Rohsynthesegasstrom an Wasserstoff und Kohlendioxid angereichert und an Kohlenmonoxid abgereichert ist,

(e) Einleiten des konvertierten Synthesegasstroms in eine zweite Wärmerückgewinnungsvorrichtung, Abkühlen des konvertierten Synthesegasstroms in der zweiten Wärmerückgewinnungsvorrichtung im indirekten Wärmetausch mit einem zweiten Kühlmittelstrom, Ausleiten des abgekühlten konvertierten Synthesegasstroms aus der zweiten Wärmerückgewinnungsvorrichtung,

(f) Einleiten des abgekühlten konvertierten Synthesegasstroms in eine erste Kohlendioxid-Abscheidevorrichtung, die mittels eines physikalischen oder chemischen Kohlendioxid-Abscheideverfahrens arbeitet, Ausleiten eines an Kohlendioxid abgereicherten Synthesegasstroms aus der ersten Kohlendioxid-Abscheidevorrichtung, Ausleiten eines ersten Kohlendioxid-Reichstroms,

(g) Einleiten des an Kohlendioxid abgereicherten Synthesegasstroms in eine nach dem Prinzip der Druckwechseladsorption (PSA) arbeitenden Wasserstoffanreicherungsvorrichtung, Ausleiten eines Reinwasserstoff-Produktstroms und mindestens eines PSA-Restgasstroms aus der Wasserstoffanreicherungsvorrichtung, wobei der mindestens eine PSA-Restgasstrom Kohlenmonoxid, Kohlendioxid und nicht umgesetzte Kohlenwasserstoffe umfasst,

(h) Einleiten mindestens eines Teils des mindestens einen PSA-Restgasstroms in mindestens einen Brenner im Reformerofen, Verbrennen des mindestens eines Teils des mindestens einen PSA-Restgasstroms mit Verbrennungsluft und mit einem Kohlenwasserstoffe enthaltenden Trimmgasstrom, wobei die Reformerrohre in dem Reformerofen beheizt werden und der Dampfreformierungsrauchgasstrom gebildet wird, Ausleiten des Dampfreformierungsrauchgasstroms aus dem Reformerofen,

(i) Einleiten des Dampfreformierungsrauchgasstroms in eine zweite Kohlendioxid-Abscheidevorrichtung, die mittels eines physikalischen oder chemischen Kohlendioxid-Abscheideverfahrens arbeitet, Ausleiten eines an Kohlendioxid abgereicherten Dampfreformierungsrauchgasstroms aus der zweiten Kohlendioxid-Abscheidevorrichtung, Ausleiten eines zweiten Kohlendioxid-Reichstroms.

2. Verfahren nach Anspruch 1, **dadurch gekennzeichnet, dass** der Einsatzgasstrom mittels eines oder mehrerer Verfahren vorbehandelt wird, die ausgewählt werden aus folgender Gruppe:
Entschwefelung unter Entschwefelungsbedingungen, Vorreformierung unter Vorreformierungsbedingungen.

3. Verfahren nach Anspruch 1 oder 2, **dadurch gekennzeichnet, dass** der zu der ersten Wärmerückgewinnungsvorrichtung geleitete erste Kühlmittelstrom einen oder mehrere Fluidströme umfasst, die ausgewählt werden aus folgender Gruppe:

- Wasser und/oder wässriges Kondensat, wobei ein erster Dampfstrom erzeugt wird,
- Kesselspeisewasser, wobei ein vorgewärmter Kesselspeisewasserstrom erzeugt wird,
- Kohlenwasserstoffe enthaltendes Einsatzgas, wobei ein vorgewärmter Einsatzgasstrom erzeugt wird.

4. Verfahren nach einem der vorigen Ansprüche, **dadurch gekennzeichnet, dass** der zu der zweiten Wärmerückgewinnungsvorrichtung geleitete zweite Kühlmittelstrom einen oder mehrere Fluidströme umfasst, die ausgewählt werden aus folgender Gruppe:

- Wasser und/oder wässriges Kondensat, wobei ein zweiter Dampfstrom erzeugt wird,
- Kesselspeisewasser, wobei ein vorgewärmter Kesselspeisewasserstrom erzeugt wird,
- Kohlenwasserstoffe enthaltendes Einsatzgas, wobei ein vorgewärmter Einsatzgasstrom erzeugt wird,
- PSA-Restgasstrom, wobei ein vorgewärmter PSA-Restgasstrom erzeugt wird,
- ein mit Kohlendioxid beladener Absorptionsmittelstrom.

5. Verfahren nach Anspruch 4, **dadurch gekennzeichnet, dass** die CO-Konvertierungsanlage und die zweite Wärmerückgewinnungsvorrichtung baulich und/oder funktional zusammenfallen.

6. Verfahren nach Anspruch 5, **dadurch gekennzeichnet, dass** die CO-Konvertierungsanlage als gekühlter Reaktor ausgestaltet ist und der zweite Kühlmittelstrom oder einer oder mehrere der von ihm umfassten Fluidströme zur Reaktorkühlung verwendet werden.

7. Verfahren nach einem der vorigen Ansprüche, **dadurch gekennzeichnet, dass** die erste Kohlendioxid-Abscheidevorrichtung gemäß mindestens eines Kohlendioxid-Abscheideverfahrens arbeitet, das ausgewählt wird aus folgender Gruppe:

(a) Absorption mit einem für Kohlendioxid selektiven physikalischen oder chemischen Absorptionsmittel,
(b) Adsorption mit einem für Kohlendioxid selektiven Adsorbens,
(c) Membrantrennung mit einer für Kohlendioxid selektiven Membran.

8. Verfahren nach Anspruch 7, **dadurch gekennzeichnet, dass** die erste Kohlendioxid-Abscheidevorrichtung als kontinuierlich betreibbare Aminwäsche ausgestaltet ist und einen Absorptionsteil und einen Regenerierungsteil umfasst, wobei die Regenerierung des mit Kohlendioxid beladenen Waschmittels im Regenerierungsteil erfolgt:

- mit Heizdampf, wobei mindestens ein Teil des ersten und/oder des zweiten Dampfstroms als Heizdampf verwendet wird, und/oder
- mit mindestens einem Teil des konvertierten Synthesegasstroms.

9. Verfahren nach Anspruch 8, **dadurch gekennzeichnet, dass** die erste Kohlendioxid-Abscheidevorrichtung als kontinuierlich betreibbare Aminwäsche ausgestaltet ist und aktiviertes Methyldiethanolamin (aMDEA) als Waschmittel verwendet wird.

10. Verfahren nach einem der vorigen Ansprüche, **dadurch gekennzeichnet, dass** die zweite Kohlendioxid-Abscheidevorrichtung gemäß mindestens Kohlendioxid-Abscheideverfahrens arbeitet, das ausgewählt wird aus folgender Gruppe:

   (a) Absorption mit einem für Kohlendioxid selektiven chemischen Absorptionsmittel,
   (b) Adsorption mit einem für Kohlendioxid selektiven Adsorbens,
   (c) Membrantrennung mit einer für Kohlendioxid selektiven Membran,
   (d) kryogene Kohlendioxid-Abtrennung.

11. Verfahren nach einem der vorigen Ansprüche, **dadurch gekennzeichnet, dass** die erste Kohlendioxid-Abscheidevorrichtung so ausgestaltet und betrieben wird, dass in ihr mindestens 40 %, bevorzugt mindestens 50 % der direkten Kohlendioxid-Emissionen des Gesamtverfahrens abgeschieden werden und dass die zweite Kohlendioxid-Abscheidevorrichtung so ausgestaltet und betrieben wird, dass der gesamte Abscheidegrad der direkten Kohlendioxid-Emissionen des Gesamtverfahrens mindestens 89 % beträgt.

12. Verfahren nach einem der vorigen Ansprüche, **dadurch gekennzeichnet, dass** die erste und zweite Kohlendioxid-Abscheidevorrichtung so ausgestaltet und betrieben werden, dass die Summe der im Gesamtverfahren erzeugten Dampfströme größer ist als die Mengenströme des verbrauchten Heizdampfs zur Regenerierung der Kohlendioxid-Abscheidevorrichtungen.

13. Verfahren nach einem der vorigen Ansprüche, **dadurch gekennzeichnet, dass** der spezifische Dampfverbrauch zur Regenerierung der Kohlendioxid-Abscheidevorrichtungen pro kg abgeschiedenes Kohlendioxid kleiner als 1,0 kg ist.

14. Verfahren nach einem der vorigen Ansprüche, **dadurch gekennzeichnet, dass** der erste und der zweite Kohlendioxid-Reichstrom mindestens einer gemeinsamen Aufbereitungsstufe zugeführt werden, die ausgewählt wird aus folgender Gruppe:

   - gemeinsamer Kohlendioxid-Trockner,
   - gemeinsamer Kohlendioxid-Verdichter,
   - gemeinsame Kohlendioxid-Verflüssigungsvorrichtung.

15. Verfahren nach Anspruch 1, **dadurch gekennzeichnet, dass** das Verfahren in zwei zeitlich getrennten Betriebsabschnitten betrieben wird, wobei im ersten Betriebsabschnitt nur die erste Kohlendioxid-Abscheidevorrichtung betrieben wird und im zweiten Betriebsabschnitt die erste Kohlendioxid-Abscheidevorrichtung und die zweite Kohlendioxid-Abscheidevorrichtung betrieben wird.

16. Anlage zum Herstellen von Reinwasserstoff durch Dampfreformierung eines Kohlenwasserstoffe enthaltenden Einsatzgases mit reduzierter Kohlendioxid-Emission, umfassend folgende, miteinander in Fluidverbindung stehende Baugruppen und Bestandteile:

   (a) Mittel zum Bereitstellen eines gasförmige oder verdampfte Kohlenwasserstoffe enthaltenden Einsatzgasstroms,
   (b) eine Hauptreformierungsstufe mit einer Vielzahl von mit einem festen, partikelförmigen Reformierungskatalysator gefüllten Reformerrohren, wobei die Reformerrohre in einem Reformerofen angeordnet sind, dessen Innenraum mittels einer Vielzahl von Brennern beheizt wird, wobei ein Dampfreformierungsrauchgasstrom gebildet wird, Mittel zum Einleiten des auf eine Dampfreformierungseintrittstemperatur erhitzten Einsatzgasstroms in die Hauptreformierungsstufe,
   (c) Mittel zum Ausleiten eines Wasserstoff, Kohlenmonoxid, Kohlendioxid und nicht umgesetzte Kohlenwasserstoffe enthaltenden Rohsynthesegasstroms aus der Hauptreformierungsstufe

(d) eine erste Wärmerückgewinnungsvorrichtung, ausgestaltet zum Abkühlen des Rohsynthesegasstroms im indirekten Wärmetausch mit einem ersten Kühlmittelstrom, Mittel zum Einleiten des Rohsynthesegasstroms in die erste Wärmerückgewinnungsvorrichtung, Mittel zum Ausleiten eines abgekühlten Rohsynthesegasstroms aus der ersten Wärmerückgewinnungsvorrichtung,

(e) eine CO-Konvertierungsanlage, umfassend mindestens eine CO-Konvertierungsstufe, Mittel zum Einleiten des abgekühlten Rohsynthesegasstroms in die CO-Konvertierungsanlage, Mittel zum Ausleiten eines konvertierten Synthesegasstroms, der gegenüber dem Rohsynthesegasstrom an Wasserstoff und Kohlendioxid angereichert und an Kohlenmonoxid abgereichert ist,

(f) eine zweite Wärmerückgewinnungsvorrichtung, ausgestaltet zum Abkühlen des konvertierten Synthesegasstroms mit einem zweiten Kühlmittelstrom, Mittel zum Einleiten des konvertierten Synthesegasstroms in die zweite Wärmerückgewinnungsvorrichtung, Mittel zum Ausleiten eines abgekühlten konvertierten Synthesegasstroms aus der zweiten Wärmerückgewinnungsvorrichtung,

(g) eine erste Kohlendioxid-Abscheidevorrichtung, ausgestaltet zum Durchführen eines physikalischen oder chemischen Kohlendioxid-Abscheideverfahrens, Mittel zum Einleiten des abgekühlten konvertierten Synthesegasstroms in die erste Kohlendioxid-Abscheidevorrichtung, Mittel zum Ausleiten eines an Kohlendioxid abgereicherten Synthesegasstroms aus der ersten Kohlendioxid-Abscheidevorrichtung, Mittel zum Ausleiten eines ersten Kohlendioxid-Reichstroms,

(h) eine Wasserstoffanreicherungsvorrichtung, ausgestaltet nach dem Prinzip der Druckwechseladsorption (PSA), Mittel zum Einleiten des an Kohlendioxid abgereicherten Synthesegasstroms in die Wasserstoffanreicherungsvorrichtung, Mittel zum Ausleiten eines Reinwasserstoff-Produktstroms und mindestens eines PSA-Restgasstroms aus der Wasserstoffanreicherungsvorrichtung, wobei der mindestens eine PSA-Restgasstrom Kohlenmonoxid, Kohlendioxid und nicht umgesetzte Kohlenwasserstoffe umfasst,

(i) Mittel zum Einleiten mindestens eines Teils des mindestens einen PSA-Restgasstroms und mindestens eines Trimmgasstroms in mindestens einen Brenner im Reformerofen, Mittel zum Ausleiten des Dampfreformierungsrauchgasstroms aus dem Reformerofen,

(j) eine zweite Kohlendioxid-Abscheidevorrichtung, ausgestaltet zum Durchführen eines physikalischen oder chemischen Kohlendioxid-Abscheideverfahrens, Mittel zum Einleiten des Dampfreformierungsrauchgasstroms in die zweite Kohlendioxid-Abscheidevorrichtung, Mittel zum Ausleiten eines an Kohlendioxid abgereicherten Dampfreformierungsrauchgasstroms aus der zweiten Kohlendioxid-Abscheidevorrichtung, Mittel zum Ausleiten eines zweiten Kohlendioxid-Reichstroms.

**17.** Anlage nach Anspruch 16, so ausgestaltet, dass

- die erste Kohlendioxid-Abscheidevorrichtung als kontinuierlich Aminwäsche mit aktiviertem Methyldiethanolamin (aMDEA) als Waschmittel betreibbar ist und einen Absorptionsteil und einen Regenerierungsteil umfasst, wobei:
- die Regenerierung des mit Kohlendioxid beladenen Waschmittels im Regenerierungsteil mit Heizdampf und/oder mit mindestens einem Teil des konvertierten Synthesegasstroms als Wärmeträgerfluid erfolgt,
- die zweite Kohlendioxid-Abscheidevorrichtung als kontinuierliche Aminwäsche betreibbar ist und einen Absorptionsteil und einen Regenerierungsteil umfasst, wobei die Regenerierung des mit Kohlendioxid beladenen Waschmittels im Regenerierungsteil mit Heizdampf erfolgt,
- mindestens ein Teil des ersten und/oder des zweiten Dampfstroms als Heizdampf verwendet wird.

**18.** Verfahren zum Nachrüsten einer existierenden Anlage zum Herstellen von Reinwasserstoff durch Dampfreformierung zur Reduzierung der Kohlendioxid-Emissionen, **dadurch gekennzeichnet, dass** das Nachrüsten in zwei zeitlich getrennten Ausbaustufen erfolgt, wobei in der ersten Ausbaustufe nur die erste Kohlendioxid-Abscheidevorrichtung installiert wird und in der zweiten Ausbaustufe zusätzlich die zweite Kohlendioxid-Abscheidevorrichtung installiert wird.

**19.** Verwendung einer Anlage nach Anspruch 16 oder 17 zum Herstellen von Reinwasserstoff durch Dampfreformierung mit reduzierter Kohlendioxid-Emission.

**Fig. 1**

**Fig. 2**

Fig. 3

Fig. 4

**Fig. 5**

**Europäisches Patentamt**
**European Patent Office**
**Office européen des brevets**

# EUROPÄISCHER RECHERCHENBERICHT

Nummer der Anmeldung

EP 21 02 0286

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2007/232706 A1 (SHAH MINISH M [US] ET AL) 4. Oktober 2007 (2007-10-04) | 1-5, 7-11,13, 16-19 | INV. C01B3/38 B01D53/047 B01D53/14 C01B3/48 C01B3/56 |
| A | * Absätze [0035] - [0042], [0054] - [0056], [0062]; Abbildung 1 * ----- | 6,12,14, 15 | |
| Y | US 2012/141368 A1 (VAKIL TARUN D [US] ET AL) 7. Juni 2012 (2012-06-07) | 1-5, 7-11,13, 16-19 | |
| A | * Absätze [0009] - [0017], [0028], [0033]; Anspruch 1; Abbildung 1 * ----- | 6,12,14, 15 | |
| A | US 8 496 908 B1 (GENKIN EUGENE S [US] ET AL) 30. Juli 2013 (2013-07-30) * Absätze [0016], [0037], [0038], [0040], [0041], [0048], [0049], [0055] - [0064], [0067]; Abbildung 1 * ----- | 1-19 | |

**RECHERCHIERTE SACHGEBIETE (IPC)**

C01B
B01D

Der vorliegende Recherchenbericht wurde für alle Patentansprüche erstellt

| Recherchenort | Abschlußdatum der Recherche | Prüfer |
|---|---|---|
| München | 8. November 2021 | Werner, Håkan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 02 0286

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-11-2021

| Im Recherchenbericht angeführtes Patentdokument | Datum der Veröffentlichung | Mitglied(er) der Patentfamilie | Datum der Veröffentlichung |
|---|---|---|---|
| US 2007232706 A1 | 04-10-2007 | BR PI0709807 A2 | 26-07-2011 |
| | | CA 2647909 A1 | 01-11-2007 |
| | | CN 101460233 A | 17-06-2009 |
| | | EP 2004307 A1 | 24-12-2008 |
| | | KR 20090015041 A | 11-02-2009 |
| | | US 2007232706 A1 | 04-10-2007 |
| | | WO 2007123673 A1 | 01-11-2007 |
| US 2012141368 A1 | 07-06-2012 | CA 2643778 A1 | 13-02-2010 |
| | | EA 201170328 A1 | 31-10-2011 |
| | | EP 2321217 A1 | 18-05-2011 |
| | | US 2010037521 A1 | 18-02-2010 |
| | | US 2012141368 A1 | 07-06-2012 |
| | | WO 2010018550 A1 | 18-02-2010 |
| US 8496908 B1 | 30-07-2013 | CA 2818354 A1 | 12-12-2013 |
| | | CN 103482568 A | 01-01-2014 |
| | | EP 2674394 A1 | 18-12-2013 |
| | | ES 2566171 T3 | 11-04-2016 |
| | | US 8496908 B1 | 30-07-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8888873 B2

- WO 2010018550A1 PCT

**In der Beschreibung aufgeführte Nicht-Patentliteratur**

- Electronic Release, Stichwort "Gas Production. **WIE.** Ullmann's Encyclopedia of Industrial Chemistry. 1998
- Gasification. **C. HIGMAN ; M. VAN DER BURGT.** Adsorption systems. Gulf Professional Publishing, 2003
- **G. COLLODI.** Hydrogen Production via Steam Reforming with CO2 Capture. *Chemical Engineering Transaction,* 2010, vol. 19, 37-42

- **D. PICHOT.** Start-up of Port-Jeröme CRYOCAP Plant: Optimized Cryogenic CO2 Capture from H2 Plants. *Energy Procedia,* 2017, vol. 114, 2682-2689
- **J. YING et al.** The Activator Mechanism of Piperazine in Aqueous Methyldiethanolamine Solutions. *Energy Procedia,* 2017, vol. 114, 2078-2087